(19) **Europäisches Patentamt**
**European Patent Office**
**Office européen des brevets**

(11) **EP 3 845 931 B1**

(12) **EUROPEAN PATENT SPECIFICATION**

(45) Date of publication and mention
of the grant of the patent:
**26.11.2025  Bulletin 2025/48**

(51) International Patent Classification (IPC):
**G01S 13/90** *(2006.01)*     **G01V 8/00** *(2006.01)*
**G01S 13/88** *(2006.01)*

(21) Application number: **20217034.6**

(22) Date of filing: **23.12.2020**

(52) Cooperative Patent Classification (CPC):
**G01V 8/005; G01S 13/887;** G01S 13/90

(54) **MULTIPLE-INPUT MULTIPLE-OUTPUT ANTENNA ARRAY ARRANGEMENT FOR ACTIVE MILLIMETER WAVE SECURITY INSPECTION IMAGING, HUMAN BODY SECURITY INSPECTION APPARATUS AND METHOD**

MIMO-ANTENNEN-ARRAY-ANORDNUNG FÜR EINE AKTIVE MILLIMETERWELLEN-SICHERHEITSINSPEKTIONSABBILDUNG, GERÄT UND VERFAHREN ZUR SICHERHEITSINSPEKTION DES MENSCHLICHEN KÖRPERS

AGENCEMENT DE RÉSEAU D'ANTENNES À ENTRÉES ET SORTIES MULTIPLES POUR L'IMAGERIE D'INSPECTION DE SÉCURITÉ DU CORPS HUMAIN À ONDES MILLIMÉTRIQUES ACTIVES, APPAREIL ET PROCÉDÉ D'INSPECTION DE SÉCURITÉ DU CORPS HUMAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2019  CN 201911425093**

(43) Date of publication of application:
**07.07.2021  Bulletin 2021/27**

(73) Proprietors:
• **Tsinghua University**
**Haidian District,**
**Beijing 100084 (CN)**
• **Nuctech Company Limited**
**TongFang Building**
**Shuangqinglu Road**
**Haidian District**
**Beijing 100084 (CN)**

(72) Inventors:
• **ZHAO, Ziran**
**Beijing 100084 (CN)**
• **YOU, Yan**
**Beijing 100084 (CN)**
• **LIU, Wenguo**
**Beijing 100084 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(56) References cited:
CN-A- 109 799 546     CN-A- 109 856 632
CN-B- 106 054 181     CN-B- 106 707 275
CN-U- 209 433 032     US-A1- 2007 075 889

**Description**

<u>**TECHNICAL FIELD**</u>

Embodiments of the present disclosure relate to a field of human body security inspection, and in particular to a MIMO (Multiple-Input Multiple-Output) antenna array arrangement for millimeter wave security inspection imaging, a human body security inspection apparatus including the multiple-input multiple-output antenna array arrangement, and a human body security inspection method performed by using the apparatus.

<u>**BACKGROUND**</u>.

At present, there are mainly two methods for public human body imaging security inspection at home and abroad.

The first human body imaging security inspection technology is based on passive millimeter wave terahertz human body imaging technology (L. Yujiri. "Passive millimeter wave imaging", IEEE MII-S Int. Microw. Sym. Dig, pp. 98-101, 2006). The biggest advantage of this method is that the imaging is achieved by detecting millimeter-wave terahertz wave radiation of a target itself without active radiation, but its biggest disadvantage is that the image quality is poor and it is easily affected by the environment.

The second human body imaging security inspection technology is based on active millimeter wave terahertz human body imaging technology. The working principle of this technology is that the apparatus first radiates millimeter waves to the human body, then receives the millimeter waves scattered by the human body or suspect object through a detector, and images the human body through a reconstruction algorithm. The typical representative is the Provision product of L3 Company (Security & Detection Systems, "Advanced personnel screening," 2016, [Online]. Available: http://www.sds.I-3com.com/products/ advanced imagingtech.htm).

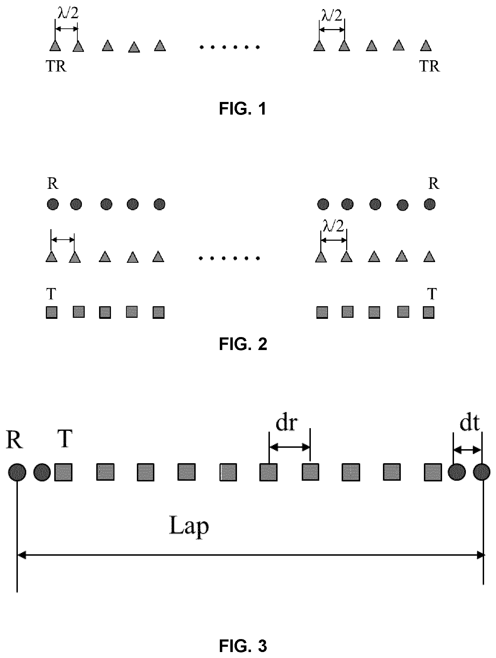

At present, generally used is one-dimensional single-transmit single-receive or quasi single-transmit single-receive linear array synthetic aperture imaging principle. Antenna array technology using fast switching may be divided into two forms as shown in FIG. 1 and FIG. 2 according to whether the transmitting and receiving antennas are integrated, and the basic principles are the same. On the aperture length required for imaging, the actual transmitting and receiving antenna units are arranged at equal intervals according to the principle of half-wavelength spacing. Back ends of the transmitting and receiving antennas are connected to the transceiving apparatus through a high-speed switch. A first set of transmitting and receiving antennas is combined with the transceiving apparatus through the switch to achieve a data acquisition. Then the switch switches to control a second set of transmitting and receiving antennas to be combined with the transceiving apparatus through the switch and achieve another data acquisition. The switch is controlled to switch sequentially from channel 1 to channel N, then N sets of data acquisition may be achieved, and data information on N equivalent elements required for the imaging is obtained.

Imaging method of one-dimensional transmit-receive integrated (transmit-receive split/quasi-single station) antenna array has the disadvantage of requiring a huge number of antenna resources. In order to achieve sampling of N equivalent elements, the transmit-receive integrated antenna array requires N antenna units, and the transmit-receive split antenna array requires 2N antenna units. The utilization rate of the transmitting and receiving antennas is very low. In addition, because implementation of the antenna array requires a large number of antenna units, and antenna unit spacing needs to meet the half-wavelength spacing requirement, when the operating frequency is low, the physical implementation is not difficult, but as the operating frequency increases, the difficulty of implementation will gradually increase.

In order to solve the above problem, document (IEEE TRANSACTIONS ON GEOSCIENCE AND REMOTE SENSING, VOL. 49, NO. 10, OCTOBER 2011) proposed a sparsely distributed multiple-input multiple-output antenna layout, as shown in FIG. 3. Although this antenna layout can reduce the number of antennas, the distance between the equivalent phase center and the transmitting-receiving antennas is relatively large, so only backward projection algorithm can be used. However, the backward projection algorithm has a slow calculation speed and it takes a long time for image reconstruction.

US2007075889A1 concerns an arrangement of receivers and transmitters used in wideband holographic imaging using a reduced number of physical antenna elements compared to established techniques and systems. At least one of the receivers is configured to receive the reflected signal from three or more of transmitters, and at least one transmitter is configured to transmit a signal to an object, the reflection of which will be received by at least three receivers.

CN109856632A concerns a fast data acquisition system for an active millimeter wave imaging radar. The system includes a data acquisition module, a transmitting-receiving control module and data transmission modules. The data acquisition module includes P identical basic configurations, each of which includes two different basic units and two identical M-transmitting and N-receiving general front ends. The basic units correspond to the general front ends in a one-to-one manner. Each basic unit includes a transmitting-receiving antenna array composed of M identical transmitting antennas and N identical receiving antennas. The transmitting-receiving control module is connected with the front ends, and is used for sending working instructions to the front ends and processing signals collected by the front ends. The data transmission modules are connected and arranged between the front ends and the transmitting-receiving control module for bidirectional data transmission.

CN209433032U concerns a sparse multi-input multi-output array arrangement structure for active millimeter wave security check imaging and human body security check equipment. The sparse multi-input multi-output array arrangement structure includes a group of transmitting antennas and a group of receiving antennas, wherein the group of transmitting antennas includes a plurality of transmitting antennas which are arranged along a first arc in a cambered surface, the group of receiving antennas includes a plurality of receiving antennas which are arranged along a second arc in the cambered surface, and the group of transmitting antennas are parallel to the group of receiving antennas, are separated from each other and are positioned on the same cambered surface; wherein at least one receiving antenna is arranged in an equal arc length range of the second arc corresponding to the interval arc length between two adjacent transmitting antennas arranged along the first arc.

CN106054181B concerns a one-dimensional sparse array layout method for terahertz real-time imaging. After single-station equivalent and micro control, an array is formed finally such that the maximum interval of equivalent units is half of the wavelength corresponding to the working frequency, wherein the equivalent units are an equivalent phase center.

CN106707275B concerns an active millimeter wave imaging method of planar scanning of a sparse linear array. Different from a fixed pairing method of transmitting-receiving antenna units in a traditional active millimeter wave imaging system, the method of the invention is based on a phase center approximation principle, antenna array layout and a switching network control mode are designed reasonably, transmitting-receiving antenna pairs in each moment are configured flexibly, dense data sampling is realized on the basis of sparse antenna layout, the quantity of required antenna units is reduced greatly on the premise that the equivalent sampling point interval is ensured, and the hardware cost and complexity of the imaging system are reduced.

CN109799546A discloses a sparse multiple-transmitting multiple-receiving array arrangement for active millimeter wave security inspection imaging, human body security inspection equipment and a human body security inspection method. The sparse multiple-transmitting multiple-receiving array arrangement includes a group of transmitting antennas of a plurality of transmitting antennas arranged along a first row and a group of receiving antennas of a plurality of receiving antennas arranged along a second row, wherein a group of the transmitting antennas are parallel to a group of the receiving antennas and are positioned on the same plane; the interval distance between the transmitting antennas and the receiving antennas is not less than twice the wavelength of the radiation wave, so that the total number of the transmitting antennas and the receiving antennas is reduced; and the sparse multiple-transmitting multiple-receiving array arrangement includes a plurality of sections, and an included angle is formed between two adjacent sections.

## SUMMARY

The present disclosure provides a human body security inspection apparatus as defined in claim 1.

According to one aspect of the present disclosure, there is provided a human body security inspection apparatus including a first assembly of sparse multiple-input multiple-output array arrangements and a second assembly of sparse multiple-input multiple-output array arrangements which are arranged oppositely to define an inspection space therebetween for human body security inspection, wherein each of the first assembly of sparse multiple-input multiple-output array arrangements and the second assembly of sparse multiple-input multiple-output array arrangements includes a plurality of sparse multiple-input multiple-output array arrangements for active millimeter wave security imaging, wherein the plurality of sparse multiple-input multiple-output array arrangements are sequentially arranged in three adjacent sections along the first direction, a second section of the sparse multiple-input multiple-output array arrangements has two ends connected to a first section of the sparse multiple-input multiple-output array arrangements and a third section of the sparse multiple-input multiple-output array arrangements respectively so as to form a broken line; wherein an angle between the second section of the sparse multiple-input multiple-output array arrangements and the first section of the sparse multiple-input multiple-output array arrangements ranges from 90° to 170°; and an angle between the second section of the sparse multiple-input multiple-output array arrangements and the third section of the sparse multiple-input multiple-output array arrangements ranges from 90° to 170°; wherein the first sparse multiple-input multiple-output array arrangement and the second sparse multiple-input multiple-output array arrangement are translatable in a second direction, said second direction being perpendicular to the first direction; wherein, in use of the human body security inspection apparatus, the first direction is a horizontal direction and the second direction is a vertical direction, wherein the sparse multiple-input multiple-output array arrangement includes two sets of transmitting antennas for transmitting millimeter waves and a set of receiving antennas for receiving the millimeter waves transmitted by the two sets of transmitting antennas and reflected by a human body, the millimeter waves having a wavelength at millimeter level; wherein the two sets of transmitting antennas include a first set of transmitting antennas and a second set of transmitting antennas, each set of transmitting antennas including a plurality of transmitting antennas arranged along the first direction; wherein the set of receiving antennas includes a plurality of receiving antennas arranged along the first direction such that an arrangement direction of the set of receiving antennas is parallel to an arrangement direction of the first set of transmitting antennas and an arrangement direction of the second set of transmitting antennas; wherein the set of receiving antennas is located in the same plane as the first set of transmitting antennas and the second set of transmitting antennas, and is located between the first set of transmitting antennas and the second set of transmitting antennas in the second direction, and a distance between the first set of transmitting antennas and the set of receiving antennas in the second direction is equal to a distance between the second set of transmitting antennas and the set of receiving antennas in the second direction, wherein adjacent transmitting antennas in the first set of transmitting antennas are spaced apart by a distance of $M\lambda$ and adjacent transmitting antennas in the second set of transmitting antennas are spaced apart by the distance of $M\lambda$, where $\lambda$ is the wavelength of the millimeter waves, and M is an even number greater than or equal to 2, and adjacent receiving antennas in the set of receiving antennas are spaced apart by a distance of $2\lambda$; wherein a distance between any one transmitting antenna in the first set of transmitting antennas and one corresponding transmitting antenna closest to said one transmitting antenna in the second set of transmitting antennas in the first direction is equal to the wavelength $\lambda$; wherein a connection line between any one transmitting antenna in the first set of transmitting antennas and a corresponding receiving antenna closest to said any one transmitting antenna in the first set of transmitting antennas is not perpendicular to the first direction, and a connection line between the corresponding transmitting antenna in the second set of transmitting antennas closest to said any one transmitting antenna in the first set of transmitting antennas and the corresponding receiving antenna closest to said any one transmitting antenna in the first set of transmitting antennas is not perpendicular to the first direction, characterized in that a connection line between said any one transmitting antenna in the first set of transmitting antennas and the corresponding transmitting antenna in the second set of transmitting antennas closest to said any one transmitting antenna in the first set of transmitting antennas is not perpendicular to the first direction.

According to an embodiment of the present disclosure, in the set of receiving antennas, at least one receiving antenna is arranged within a range having a length equal to a spacing between two adjacent transmitting antennas in the first set of transmitting antennas, such that the number of transmitting antennas in the first set of transmitting antennas is equal to or less than the number of receiving antennas in the set of receiving antennas; and in the set of receiving antennas, at least one receiving antenna is arranged within a range having a length equal to a spacing between two adjacent transmitting antennas in the second set of transmitting antennas, such that the number of transmitting antennas in the second set of transmitting antennas is equal to or less than the number of receiving antennas in the set of receiving antennas.

According to an embodiment of the present disclosure, a midpoint of a connection line between one transmitting antenna in the first set of transmitting antennas and one of a plurality of receiving antennas closest to said one transmitting antenna in the set of receiving antennas is regarded as a virtual equivalent phase center of the pair of transmitting antenna and receiving antenna, a distance between adjacent equivalent phase centers in the first direction is equal to the wavelength of the millimeter wave, and the plurality of transmitting antennas in the first set of transmitting antennas and the plurality of receiving antennas in the set of receiving antennas form a first set of equivalent phase centers. A midpoint of a connection line between one transmitting antenna in the second set of transmitting antennas and one of a plurality of receiving antennas closest to said one transmitting antenna in the set of receiving antennas is regarded as a virtual equivalent phase center of the pair of transmitting antenna and receiving antenna, a distance between adjacent equivalent phase centers in the first direction is equal to the wavelength of the millimeter wave, and the plurality of transmitting antennas in the second set of transmitting antennas and the plurality of receiving antennas in the set of receiving antennas form a second set of equivalent phase centers.

According to an embodiment of the present disclosure, a distance between any equivalent phase center in the first set of equivalent phase centers and an equivalent phase center closest to said any equivalent phase center in the second set of equivalent phase centers in the first direction is 0.3 to 0.7 times the wavelength of the millimeter wave.

According to an embodiment of the present disclosure, a distance between any equivalent phase center in the first set of equivalent phase centers and an equivalent phase center closest to said any equivalent phase center in the second set of equivalent phase centers in the first direction is 0.5 times the wavelength of the millimeter wave.

According to an embodiment of the present disclosure, a distance between the first set of transmitting antennas and the second set of transmitting antennas is less than 10% of an imaging distance.

According to an embodiment of the present disclosure, the transmitting antennas in the first set of transmitting antennas are configured to sequentially emit millimeter waves, and the transmitting antennas in the second set of transmitting antennas are configured to emit millimeter waves sequentially and asynchronously with the transmitting antennas in the first set of transmitting antennas.

According to an embodiment of the present disclosure, the sparse multiple-input multiple-output array arrangement is configured to perform scanning along the second direction by moving in the second direction with respect to the human body to be inspected.

According to an embodiment of the present disclosure, the sparse multiple-input multiple-output array arrangement is further configured to implement an image reconstruction on a correct imaged area in one time based on a Fourier transform-based synthetic aperture holographic algorithm by using the imaging equation is:

$$\sigma\left(x,y\right) = FT_{2D}^{-1}\left[FT_{2D}\left[s\left(x_{t},y_{t},x_{r},y_{r},\mathrm{K}_{\omega}\right)\right]e^{-j\sqrt{4k^{2}-k_{x}^{2}-k_{y}^{2}}R_{0}}\right]$$

where $\sigma(x, y)$ is a scattering coefficient of the human body, $R_0$ is an imaging distance, $FT_{2D}$ is a two-dimensional Fourier transform, $FT_{2D}^{-1}$ is a two-dimensional inverse Fourier transform, j is an imaginary unit, k is a propagation constant, $k_x$ and $k_y$ are space propagation constants respectively;

$$S(x_{t},y_{t};x_{r},y_{r};K_{\omega}) = \iint_{D}\sigma(x_{n},y_{n})\exp[-jK_{\omega}(R_{t,n}+R_{r,n})]dr$$

is an echo signal from the human body received by a pair of transmitting antenna and receiving antenna; $K_\omega$ is a spatial frequency of a frequency stepping signal; for a point target in a target area, I represents a scattered point target at $I(x_n,y_n)$, a distance between I and a transmitting antenna At is defined as $R_{t,n}$, and a distance between I and a receiving antenna $A_r$ is defined as $R_{r,n}$.

According to an embodiment of the present disclosure, the first sparse multiple-input multiple-output array arrangement and the second sparse multiple-input multiple-output array arrangement each includes a plurality of above-mentioned sparse multiple-input multiple-output array arrangements arranged sequentially along the second direction.

According to an embodiment of the present disclosure, the defined inspection space is configured to allow the human body to be inspected to stand parallel to the first direction in the defined inspection space and can rotate at any angle, wherein the first direction is the vertical direction, and the second direction is the horizontal direction.

According to an embodiment of the present disclosure, the first sparse multiple-input multiple-output array arrangement is configured to emit the millimeter waves from a lowest frequency to a highest frequency and the second sparse multiple-input multiple-output array arrangement is configured to emit the millimeter waves from the highest frequency to the lowest frequency, or the second sparse multiple-input multiple-output array arrangement is configured to emit the millimeter waves from the lowest frequency to the highest frequency and the first sparse multiple-input multiple-output array arrangement is configured to emit the millimeter waves from the highest frequency to the lowest frequency.

## BRIEF DESCRIPTION OF THE DRAWINGS

FIG. 1 shows a schematic diagram of an conventional one-dimensional single-transmit single-receive antenna array;

FIG. 2 shows a schematic diagram of an conventional one-dimensional multiple-input multiple-output antenna array;

FIG. 3 shows a schematic diagram of an conventional one-dimensional multiple-input multiple-output antenna array;

FIG. 4 shows a working principle diagram of multiple transmitting antennas and multiple receiving antennas;

FIG. 5 shows a schematic diagram of a sparse multiple-input multiple-output array arrangement according to an example not forming part of the present disclosure, wherein a spacing between transmitting antennas is 6λ;

FIG. 6 shows a schematic diagram of a sparse multiple-input multiple-output array arrangement according to an example not forming part of the present disclosure, wherein a spacing between transmitting antennas is 4A,

FIG. 7 shows a schematic diagram of a sparse multiple-input multiple-output array arrangement according to an example not forming part of the present disclosure, wherein a spacing between transmitting antennas is 2λ;

FIG. 8 shows a schematic diagram of a sparse multiple-input multiple-output array arrangement according to an example not forming part of the present disclosure, wherein a spacing between transmitting antennas is 8λ;

FIG. 9 shows a human body security inspection apparatus according to an embodiment of the present disclosure;

FIG. 10 shows a human body security inspection apparatus according to an embodiment of the present disclosure;

FIG. 11 shows a human body security inspection apparatus according to an embodiment of the present disclosure;

FIG. 12 shows a top view of the human body security inspection apparatus shown in FIG. 11;

FIG. 13 shows a schematic diagram of the sparse multiple-input multiple-output array arrangement of the human body security inspection apparatus shown in FIG. 11; and

FIG. 14 shows a human body security inspection apparatus according to an embodiment of the present disclosure.

## DETAILED DESCRIPTION

Although the present disclosure allows various modifications and substitutions, its specific embodiments are shown in the drawings by way of example and will be described in detail herein. However, it should be understood that the accompanying drawings and detailed description are not intended to limit the present disclosure to the specific forms disclosed, but on the contrary, they are intended to cover all modifications and substitutions falling within the scope of the scope of the present disclosure defined by the appended claims. The drawings are for illustration and are not drawn to scale.

The terms "upper", "lower", "left", "right" and the like are used in the specification not to limit the absolute orientation of the element, but to describe the relative position of the element in the view to help understanding. In the specification, "top side" and "bottom side" refer to the orientation of the upper side and the lower side of an upright object in general. "First" and "second" are not for ordering, but for distinguishing different components.

First introduced is some basic knowledge of the millimeter wave human body security inspection used for the embodiments of the present disclosure.

Nyquist's sampling theory refers to that the required sample number along the aperture is determined by several factors, including wavelength, aperture size, target size, and distance to the target. If a phase shift from one sampling point to a next sampling point is less than $\pi$, the Nyquist's sampling theory is satisfied. The worst case is that the target is very close to the aperture and the sampling point is close to an edge of the aperture. For a spatial sampling interval $\Delta x$, the worst case is that the phase shift does not exceed $2k\Delta x$. Therefore, the sampling rule may be expressed as:

$$\Delta x < (\lambda/4)$$

where $\lambda = 2\pi/k$ is the wavelength.

This result is more stringent than usual because the target (such as the human body) is usually close to the aperture and the antenna beam width is usually less than 180 degrees. For this reason, the applied imaging system usually uses a sampling interval of the order of $\lambda/2$.

Take the operating frequency 24-30 GHz and 70-80 GHz as examples for comparison, the corresponding wavelengths are 10 mm and 4 mm respectively. To achieve the existing one-dimensional array shown in FIG. 1 and FIG. 2, the distances between the transmitting and receiving antennas are required to be 5 mm and 2 mm, respectively. Assuming that the antenna aperture length is 1 m, the transmit-receive integrated antenna array needs 200 and 500 antenna units respectively, and the transmit-receive split antenna array needs 400 and 1000 antenna units. It can be seen that as the frequency increases, the antenna spacing becomes smaller, and the number of required antennas increases sharply. The smaller antenna spacing makes the design of antenna units and array layout extremely difficult, and it also limits the performance of the transmitting-receiving antenna. The increase in the number of antennas not only increases the hardware cost and the system's complexity, but also increases the data amount and the acquisition time. Therefore, the one-dimensional array shown in FIG. 1 and FIG. 2 is not feasible for application in high-frequency millimeter wave (50 GHz-300 GHz) human body imaging security inspection, and does not have engineering value.

FIG. 3 shows an existing sparsely distributed multiple-input multiple-output antenna layout, where T represents the transmitting antenna and R represents the receiving antenna. Although this antenna layout can reduce the number of antennas, it also has disadvantages. For example, due to the large distance between the equivalent phase center and the transmitting and receiving antennas, only the backward projection algorithm can be used. The backward projection algorithm has a slow calculation speed and it takes a long time for the image reconstruction. The backward projection algorithm originated from computer tomography technology, and is an accurate imaging algorithm based on time-domain signal processing. The basic idea is that for each imaging point in the imaging area, the delay between the point and the receiving and transmitting antennas is calculated to coherently superimpose the contributions of all echoes thereto, so as to obtain the corresponding pixel value of the point in the image. In this way, coherent superposition processing is performed on the entire imaging area point by point so that an image of the imaging area is obtained. The biggest disadvantage of this algorithm is that it needs to reconstruct every point in the entire imaging region, the reconstruction is slow and takes a long time. In addition, the receiving antennas at both ends are densely distributed, and the interval must satisfy the Nyquist's sampling theory. For example, in the 170 GHz-260 GHz frequency band, the transmitting antenna and receiving antenna typically have an aperture of 10.8 mm, and the half-wavelength corresponding to the center frequency is 1.36 mm. Obviously, this antenna arrangement is not suitable. One solution is to sparsely arrange the receiving antennas so that the interval of equivalent phase centers is larger than the half-wavelength. However, insufficient antenna sampling will cause serious artifacts in the reconstructed image.

The present disclosure proposes a sparse multiple-input multiple-output array arrangement scheme. Through the sparse design and control technology of the multiple-input multiple-output array, the data acquisition speed and the utilization rate of antenna units can be greatly improved. Electrical scanning is completely achieved along the array direction (that is, the antennas are controlled by the switch to operate one by one, or the antennas are controlled by the switch to scan frequency by frequency), and mechanical scanning is not needed, which may achieve fast scanning and improve the imaging speed. In addition, the fast Fourier transform-based reconstruction algorithm may be used to significantly improve the reconstruction speed. At the same time, the hardware complexity is reduced and the engineering feasibility is improved.

According to an embodiment of the present disclosure, a one-dimensional sparse multiple-input multiple-output array arrangement for active millimeter wave imaging is provided. After a single station equivalence and an electric switch control, the sparse multiple-input multiple-output array finally forms the equivalent elements with the interval which is at most slightly greater than or equal to half of the wavelength corresponding to the operating frequency, and the equivalent element is the equivalent phase center.

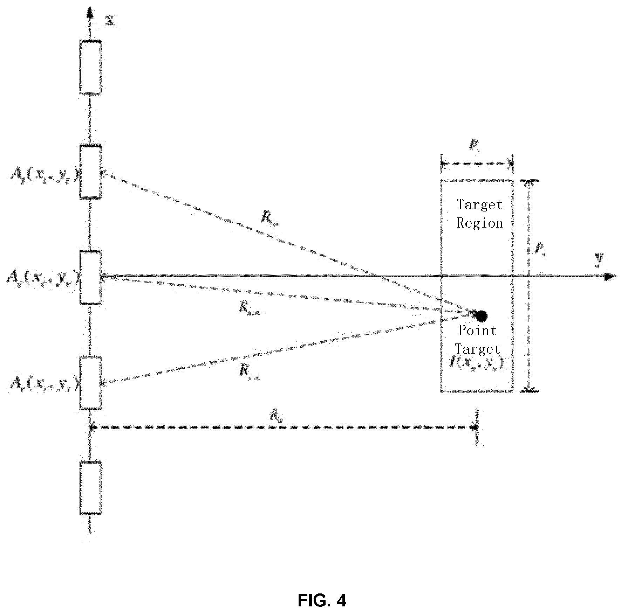

For the convenience of explanation, FIG. 4 shows a multiple-input multiple-output system, where an X-Y coordinate system is constructed. The sparse transmitting-receiving combination is set on the x-axis. $A_t(x_t, y_t)$ and $A_r$ $(x_r, y_r)$ are used to respectively represent the transmitting antenna and the receiving antenna of a pair of transmitting-receiving antenna as well as location coordinates thereof.

For a point target in the target area, I represents the scattered point target at $I(x_n, y_n)$, the distance between I and the transmitting antenna At is defined as $R_{t,n}$, the distance between I and the receiving antenna $A_r$ is defined as $R_{r,n}$, $R_0$ is a vertical distance between the target area center and the linear array, that is, the imaging distance.

$$R_{t,n} = \sqrt{(x_t - x_n)^2 + (y_t - y_n)^2}$$

$$R_{r,n} = \sqrt{(x_r - x_n)^2 + (y_r - y_n)^2}$$

The echo signal after scattering of the point target may be expressed as

$$S_n(x_t, y_t; x_r, y_r; K_\omega) = \sigma(x_n, y_n) \exp[-jK_\omega(R_{t,n} + R_{r,n})]$$

where, $\sigma(x, y)$ is the scattering coefficient of the human body, $K_\omega$ is the spatial frequency of the frequency stepping signal, and j is the imaginary unit.

The echo signal from the target area received by the transmitting-receiving combination $A_t A_r$ is:

$$S(x_t, y_t; x_r, y_r; K_\omega) = \iint_D \sigma(x_n, y_n) \exp[-jK_\omega(R_{t,n} + R_{r,n})] dr$$

where D is the imaging area.

An equivalent position of the transmitted and received signals may be represented by the phase center of the antenna. The equivalent position is a physical center of two independent antennas or apertures. In the multiple-input multiple-output system, one transmitting antenna corresponds to a plurality of receiving antennas. In the embodiments of the present disclosure, the receiving antenna unit and the transmitting antenna unit are arranged to be not in the same position. This system in which the transmitting and receiving antennas are spatially separated may be simulated with a virtual system, in which a virtual position is added to each set of transmitting and receiving antennas. This position is called the equivalent phase center. The echo data collected by the transmitting-receiving antenna combination may be equivalent to the echo collected by the spontaneous-transmit spontaneous-receive antenna at the position of the equivalent phase center $A_e(x_e, y_e)$.

For this transmitting-receiving combination, the relationship between the physical coordinates of the antennas may be expressed as:

$$x_e = \frac{x_t + x_r}{2}, y_e = \frac{y_t + y_r}{2}$$

According to the principle of equivalent phase center, the equivalent echo signal may be expressed as:

$$S'(x_t, y_t; x_r, y_r; K_\omega) \approx \iint_D \sigma(x_n, y_n) \exp[-jK_\omega 2R_{e,n}] dr$$

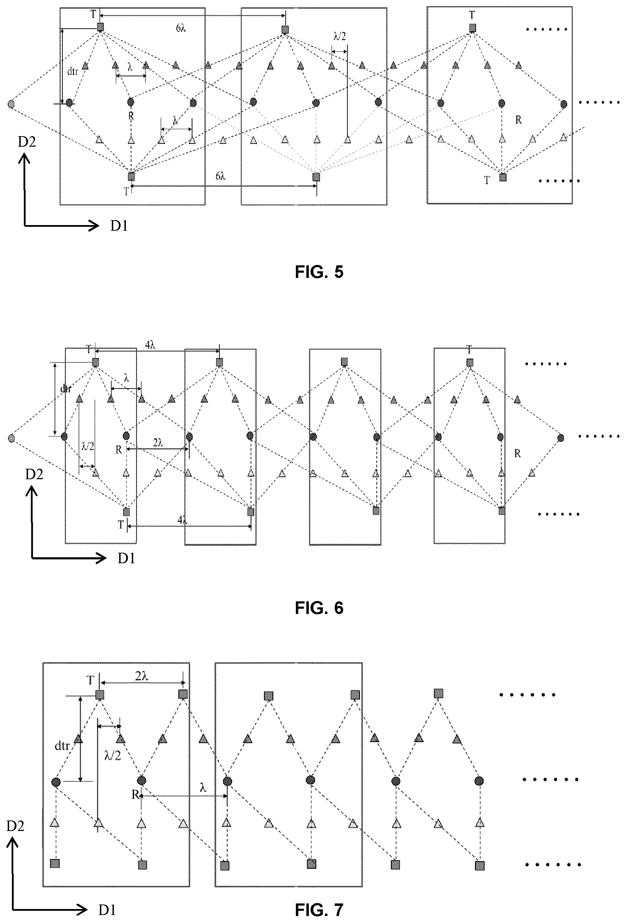

According to the principle of the above-mentioned sparse multiple-input multiple-output array arrangement for active millimeter wave imaging of the present disclosure, FIG. 5 shows a schematic diagram of the sparse multiple-input multiple-output array arrangement according to an embodiment of the present disclosure. The sparse multiple-input multiple-output array arrangement in FIG. 5 may be specifically constructed by the following steps.

First, determine required number N and interval d of equivalent elements according to the imaging index parameters such as operating frequency (wavelength $\lambda$), antenna array length Lap and other requirements, where the interval d is preferably slightly greater than or equal to half of the wavelength corresponding to the operating frequency. Then, arrange the actual antenna units in a transmit-receive split mode, where the transmitting antennas/receiving antennas are respectively distributed in three parallel lines (two transmitting antenna arrays), and the interval between the two transmitting antenna arrays is 2*dtr. Next, design the arrangement of the transmitting antenna units, where the total number of the transmitting antennas is an arbitrary number Nt which is determined by the antenna aperture Lap, and the spacing between adjacent transmitting antennas is $M\lambda$ (M is an even number and $M \geq 2$). Next, design the arrangement of the receiving antenna units, where the total number of the receiving antennas is an arbitrary number $N_r$, and the receiving antennas are distributed at equal interval of $2\lambda$. The TR distance dtr between the set of transmitting antennas and the set of receiving antennas may be any value. On the one hand, the transmitting-receiving antenna array can be placed, which makes the mutual coupling small. On the other hand, it requires $2d_{tr}/z_0 < 10\%$, where $z_0$ is the imaging distance.

The sparse multiple-input multiple-output array arrangement constructed according to the above steps includes two sets of transmitting antennas for transmitting millimeter waves and a set of receiving antennas for receiving the millimeter waves transmitted by the two sets of transmitting antennas and reflected by a human body. The two sets of transmitting antennas include a first set of transmitting antennas and a second set of transmitting antennas each including a plurality of transmitting antennas T arranged along a first direction D1. The set of receiving antennas includes a plurality of receiving antennas R arranged along the first direction so that an arrangement direction of the set of receiving antennas is parallel to an arrangement direction of the first set of transmitting antennas and an arrangement direction of the second set of transmitting antennas. The set of receiving antennas is located in the same plane as the first set of transmitting antennas and the second set of transmitting antennas, and is located between the first set of transmitting antennas and the second set of transmitting antennas in a second direction D2 perpendicular to the first direction, so that a distance $d_{tr}$ between the first set of transmitting antennas and the set of receiving antennas in the second direction is equal to a distance $d_{tr}$ between the second set of transmitting antennas and the set of receiving antennas in the second direction. In the set of receiving antennas, at least one receiving antenna is arranged within a range having a length equal to the spacing between two adjacent transmitting antennas in the first set of transmitting antennas, so that the number of transmitting antennas in the first set of transmitting antennas is equal to or less than the number of receiving antennas in the set of receiving antennas, and in the set of receiving antennas, at least one receiving antenna is arranged within a range having a length equal to the spacing between two adjacent transmitting antennas in the second set of transmitting antennas, so that the number of transmitting antennas in the second set of transmitting antennas is equal to or less than the number of receiving antennas in the set of receiving antennas.

Therefore, the sparse multiple-input multiple-output array arrangement according to the present disclosure may reduce the number of receiving antennas while ensuring image clarity. The number of transmitting antennas is equal to or less than the number of receiving antennas, thereby reducing the total number of components, and thus reducing manufacturing difficulty and cost.

In an embodiment, the adjacent transmitting antennas in the first set of transmitting antennas and the adjacent transmitting antennas in the second set of transmitting antennas each are spaced apart by a distance of $M\lambda$, where $\lambda$ is the wavelength of the millimeter wave, and M is an even number greater than or equal to 2. Adjacent receiving antennas in the set of receiving antennas are spaced apart by a distance of $2\lambda$; where $\lambda$ is the wavelength of the millimeter wave. The distance between a transmitting antenna in the first set of transmitting antennas and a closest transmitting antenna in the second set of transmitting antennas in the first direction is the wavelength $\lambda$.

FIG. 5 shows a schematic diagram of the sparse multiple-input multiple-output array arrangement according to an embodiment of the present disclosure, wherein the spacing between adjacent transmitting antennas is $6\lambda$, the spacing between adjacent receiving antennas is $2\lambda$; and the distance between a first transmitting antenna in the first set of transmitting antennas and a first transmitting antenna in the second set of transmitting antennas in the first direction D1 is a wavelength $\lambda$, and so on. Correspondingly, the distance between a second transmitting antenna in the first set of transmitting antennas and a second transmitting antenna in the second set of transmitting antennas in the first direction D1 is also the wavelength $\lambda$. An alternative way is to provide 2 transmitting antennas and 3 receiving antennas in a chip, as shown in a block in FIG. 5.

FIG. 6 shows a schematic diagram of a sparse multiple-input multiple-output array arrangement according to an embodiment of the present disclosure, wherein the spacing between adjacent transmitting antennas is $4\lambda$, the spacing between adjacent receiving antennas is $2\lambda$; and the distance between the first transmitting antenna in the first set of transmitting antennas and the first transmitting antenna in the second set of transmitting antenna in the first direction D1 is the wavelength $\lambda$, and so on. Correspondingly, the distance between a second transmitting antenna in the first set of transmitting antennas and a second transmitting antenna in the second set of transmitting antennas in the first direction D1 is also the wavelength $\lambda$. An alternative way is to provide 2 transmitting antennas and 2 receiving antennas in a chip, as shown in a block in FIG. 6.

FIG. 7 shows a schematic diagram of a sparse multiple-input multiple-output array arrangement according to an embodiment of the present disclosure, wherein the spacing between adjacent transmitting antennas is $2\lambda$; the spacing between adjacent receiving antennas is $2\lambda$; and the distance between the first transmitting antenna in the first set of transmitting antennas and the first transmitting antenna in the second set of transmitting antenna in the first direction is the wavelength $\lambda$, and so on. Correspondingly, the distance between the second transmitting antenna in the first set of transmitting antennas and the second transmitting antenna in the second set of transmitting antennas in the first direction is also the wavelength $\lambda$. An alternative way is to provide 4 transmitting antennas and 2 receiving antennas in a chip, as shown in a block in FIG. 7.

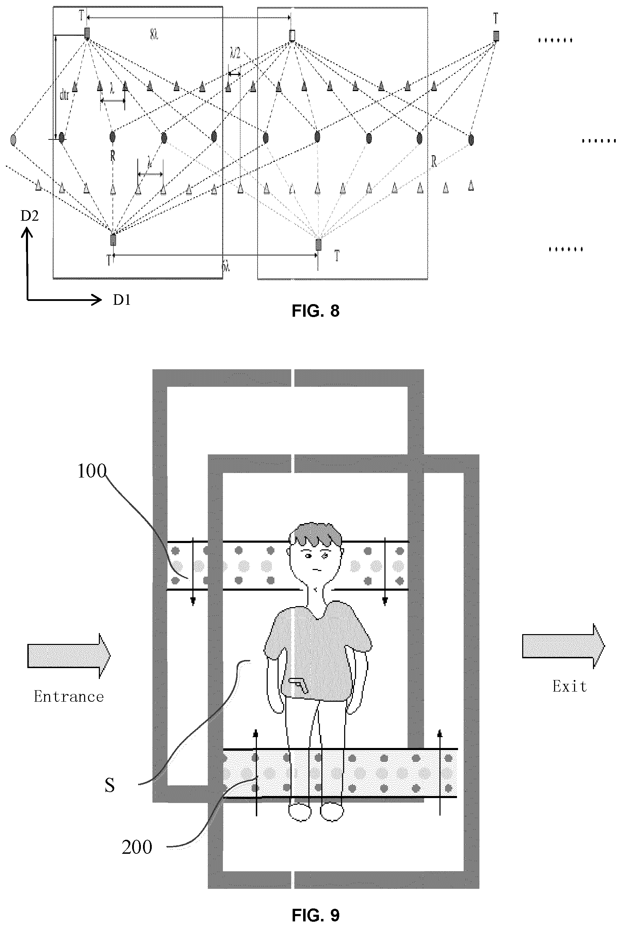

FIG. 8 shows a schematic diagram of a sparse multiple-input multiple-output array arrangement according to an embodiment of the present disclosure, wherein the spacing between adjacent transmitting antennas is $8\lambda$, the spacing between adjacent receiving antennas is $2\lambda$; and the distance between the first transmitting antenna in the first set of transmitting antennas and the first transmitting antenna in the second set of transmitting antenna in the first direction is the wavelength $\lambda$, and so on. Correspondingly, the distance between the second transmitting antenna in the first set of transmitting antennas and the second transmitting antenna in the second set of transmitting antennas in the first direction is also the wavelength $\lambda$. An alternative way is to provide 2 transmitting antennas and 4 receiving antennas in a chip, as shown in a block in FIG. 8.

In the schematic diagrams of the sparse multiple-input multiple-output array arrangement shown in FIG. 5 to FIG. 8, the connection line between any one transmitting antenna in the first set of transmitting antennas and any one receiving antenna is not perpendicular to the first direction D1, and at least one transmitting antenna in the second set of transmitting antennas is aligned with at least one receiving antenna so that a connection line thereof is perpendicular to the first direction D1. Preferably, as shown in FIGS. 5 to 8, a projection of any one transmitting antenna in the first set of transmitting antennas on a straight line where the set of receiving antennas is located between two adjacent receiving antennas and a distance between the projection and one of said two adjacent receiving antennas is identical to a distance between the projection and the other of said two adjacent receiving antennas, that is, at the midpoint of the connection line between two adjacent receiving antennas, and a projection of any transmitting antenna in the second set of transmitting antennas on the straight line where the set of receiving antennas is located coincides with the corresponding receiving antenna.

The embodiments described in FIGS. 5-8 are only a part but not all of the embodiments of the present disclosure and they do not fall into the claimed subject-matter.

According to the present invention, the projection of a transmitting antenna in the first set of transmitting antennas on the straight line where the set of receiving antennas is located is not in the middle of the two receiving antennas, and the transmitting antenna in the second set of transmitting antennas is misaligned with the corresponding receiving antenna. That is to say, the connection line between any transmitting antenna in the first set of transmitting antennas and any receiving antenna is not perpendicular to the first direction, and the connection line between any transmitting antenna in the second set of transmitting antennas and any receiving antenna is not perpendicular to the first direction. It is only required that the distance between a transmitting antenna in the first set of transmitting antennas and the closest transmitting antenna in the second set of transmitting antennas in the first direction is the wavelength $\lambda$. In the embodiments of the invention not directly shown in FIGS. 5-8, the arrangement of the transmitting antennas is changed based on, for example, FIGS. 5-8. With reference to FIG. 5, in the embodiments of the invention, the first set of transmitting antennas and the second set of transmitting antennas are all shifted to the right relative to the receiving antennas by a distance between $0-\lambda$ (for example, $0.5\lambda$), so that the connection lines between the first and second sets of transmitting antennas and the corresponding receiving antennas each is not perpendicular to the first direction. However, the distance between adjacent equivalent phase centers formed in this case can still be about $0.5\lambda$. For example, when the transmitting antenna is shifted by $0.5\lambda$, the first set of equivalent phase centers and the second set of equivalent phase centers are all shifted to the right by about $0.25\lambda$, and the distance between adjacent equivalent phase centers can still be about $0.5\lambda$. The equivalent phase center will be described in detail below.

In the embodiments of the invention, not shown, when the projection of the transmitting antenna in the first set of transmitting antennas is not located in the center of the two receiving antennas and the projection of the transmitting antenna in the second set of transmitting antennas does not coincide with the corresponding receiving antenna, but the adjacent transmitting antennas in the two sets of transmitting antennas are misaligned by $\lambda$, the two sets of equivalent phase centers shown also shift correspondingly with the displacement of the first set of first transmitting antennas and the second set of transmitting antennas relative to the receiving antennas, and the distance between any equivalent phase center in the first set of equivalent phase centers formed and the closest equivalent phase center in the second set of equivalent phase centers in the first direction is still 0.5 times the wavelength of the millimeter wave.

The equivalent phase center will be described in detail below. The midpoint of the connection line between a transmitting antenna in the first set of transmitting antennas and a receiving antenna of closest plurality of receiving antennas in the set of receiving antennas is regarded as a virtual equivalent phase center of the pair of transmitting antenna and receiving antenna. The plurality of transmitting antennas in the first set of transmitting antennas and the plurality of receiving antennas in the set of receiving antennas form a first set of equivalent phase centers. The midpoint of the connection line between a transmitting antenna in the second set of transmitting antennas and a receiving antenna of closest plurality of receiving antennas in the set of receiving antennas is regarded as a virtual equivalent phase center of the pair of transmitting antenna and receiving antenna. The plurality of transmitting antennas in the second set of transmitting antennas and the plurality of receiving antennas in the set of receiving antennas form a second set of equivalent phase centers.

In order to reduce the number of transmitting antennas and receiving antennas and generally avoid the overlap of equivalent phase centers, the distance between adjacent equivalent phase centers in the first and second sets of equivalent phase centers being about half of the wavelength of the millimeter wave may be sufficient to construct a clear image finally. For example, the distance between adjacent equivalent phase centers is 0.3 to 0.7 times the wavelength of the millimeter wave. In other words, when the distance between the adjacent equivalent phase centers in the first and second sets of equivalent phase centers is too much larger than half of the wavelength of the millimeter wave, the image may be unclear. In the embodiment of the present disclosure, it can be seen from FIGS. 5-8 that the distance between any one equivalent phase center in the first set of equivalent phase centers and the closest equivalent phase center in the second set of equivalent phase centers in the first direction is 0.3 to 0.7 times the wavelength of the millimeter wave, and preferably is $0.5\lambda$.

In FIGS. 5-8, the transmitting antenna represented by the square T and the receiving antenna represented by the circle R are connected by a dotted line, the midpoint of T and R is represented by a triangle, and the triangular position represents the virtual equivalent phase center. One transmitting antenna may generally correspond to a plurality of receiving antennas. For example, one transmitting antenna may correspond to 3, 4, 5, 6, 7 or 8 receiving antennas, that is, the signal transmitted by a transmitting antenna is received and identified by closest 3, 4, 5, 6, 7 or 8 receiving antennas. In fact, the signal of the transmitting antenna may also be received by other receiving antennas. However, in practical applications, the reception of other receiving antennas is not considered. That is to say, each transmitting antenna is paired with fixed corresponding receiving antennas for measurement, and serial numbers of the corresponding receiving antennas may be pre-defined by a program. There is a virtual equivalent phase center between each pair of transmitting antenna and receiving antenna. These virtual equivalent phase centers are shown as the triangles in FIGS. 5-8. As shown in FIGS. 5-8, the distance between the adjacent equivalent phase centers in the first set of equivalent phase centers (the upper set of equivalent phase centers) is the wavelength $\lambda$ of the millimeter wave, and the distance between the adjacent equivalent phase centers in the second set of equivalent phase centers (the lower set of equivalent phase centers) is the wavelength $\lambda$ of the millimeter wave. Moreover, the first set of equivalent phase centers and the second set of equivalent phase centers are misaligned in the first direction by $0.5\lambda$, that is to say, the distance between any equivalent phase center in the first set of equivalent phase centers and the closest equivalent phase center in the second set of equivalent phase centers in the first direction is 0.5 times the wavelength of the millimeter wave.

Now referring to FIG. 5, the design process of forming the array with 84 transmitting antennas and 125 receiving antennas is described by way of example to introduce the sparse multiple-input multiple-output array arrangement of the present disclosure. Those skilled in the art may arrange the sparse array according to the teachings of the present disclosure.

As shown in FIG. 5, when M=6 and the array length is 1m, the design process of forming the array with Nt=84 transmitting antennas and $N_r$=125 receiving antennas is described by way of example to introduce the one-dimensional sparse multiple-input multiple-output array arrangement of the present disclosure. Those skilled in the art may arrange the one-dimensional sparse array according to the teachings of the present disclosure.

First, determine the required number and interval of equivalent elements according to the imaging index parameter requirements, such as imaging resolution, sidelobe level and other parameters, that is, determine the distribution of the equivalent virtual array. The interval of the equivalent array elements needs to be slightly greater than or equal to half of the operating wavelength at most. Then, the actual antenna units are arranged in a transmit-receive split mode. The transmitting antennas/receiving antennas/transmitting antennas are respectively distributed in three parallel lines. The line distance may be any value, but as small as possible (which may be $\lambda$, $1.5\lambda$, $2\lambda$; $3\lambda$, $4\lambda$, etc.), which is reasonably selected based on the actual antenna unit size and array size design requirements. In the present disclosure, the array size is 1m. Next, as shown in FIG. 5, design the layout of the transmitting antenna units. The total number of transmitting antennas is 84 (which may be expanded to any other number, the specific number is determined by the imaging resolution, imaging range and other factors). The transmitting antennas are divided into two rows. The spacing between adjacent transmitting antennas in each row is $6\lambda$. The two rows of transmitting antennas have a misalignment of $\lambda$. Next, design the layout of the receiving antenna units. The total number of receiving antennas is 125 (which may be expanded to any other number, and the specific number is determined by imaging resolution, imaging range and other factors). The spacing between adjacent receiving antennas is $2\lambda$.

According to the embodiments of the present disclosure, the distance between the first or second set of transmitting antennas and the set of receiving antennas may be arbitrary. However, it is advantageous to make the distance between one set of transmitting antennas and the set of receiving antennas as small as possible, because a too large distance will cause non-establishment of the condition of the equivalent phase center (the distance between adjacent equivalent phase centers is half of the wavelength or close to half of the wavelength). However, in practical applications, a too small distance will cause difficulties in implementation, such as the problem of crosstalk and spatial arrangement. In an embodiment, the distance between the first set of transmitting antennas and the second set of transmitting antennas is less than 10% of the imaging distance, that is, $2d_{tr}/z_0 < 10\%$, where $z_0$ is the imaging distance.

When the sparse multiple-input multiple-output array arrangement operates, the first to $Nt^{th}$ transmitting antennas in the first row and the M receiving antennas form a row of equivalent phase centers 1 at equal intervals $\lambda$, and the second row of transmitting antennas and the receiving antennas also form a row of equivalent phase centers 2 at equal intervals $\lambda$. The equivalent phase centers 1 and 2 are exactly offset by $\lambda 2$ in space, so the equivalent phase centers 1 and 2 are combined into a new row of equivalent phase centers. Finally, the equivalent element layout that meets the Nyquist's sampling theory is obtained. By the electric switch control, the transmitting antennas are sequentially switched to complete a data acquisition. Then synthetic aperture scanning is performed in the direction orthogonal to the array to achieve the scanning of the two-dimensional aperture. Finally, combined with the fast Fourier transform-based synthetic aperture holographic algorithm, fast reconstruction may be performed and imaging testing is achieved.

The so-called synthetic aperture technology refers to that the object under inspection is stationary, and the transmit-receive array module mechanically scans along the direction orthogonal to the array to achieve the scanning of the object under inspection. In an alternative embodiment, it is also possible that the transmit-receive array is stationary, and the object under inspection moves along the direction orthogonal to the array to achieve the scanning of the object under inspection. When the person under inspection enters the detection space, the transmitting antennas in the MIMO line array transmit sequentially, and the corresponding receiving antennas receive. Then mechanical scanning is performed in the direction orthogonal to the array, and the scanning step length is equal to or slightly larger than half of the center wavelength, until the entire area array scanning is completed, then all the scattering data of the person under inspection at different viewing angles are obtained. That is, the synthetic aperture technology is used to image the object under inspection. The length of the mechanical scan is taken as (0.8 m-2.5 m).

In an embodiment, the transmitting antennas in the first set of transmitting antennas in the sparse multiple-input multiple-output array arrangement sequentially transmit millimeter waves, the transmitting antennas in the second set of transmitting antennas sequentially transmit millimeter waves, and the corresponding receiving antennas receive the reflected signal, so as to achieve scanning along the first direction. The transmitting antennas in the first set of transmitting antennas emit the millimeter waves asynchronously with the transmitting antennas in the second set of transmitting antennas, so that the millimeter waves emitted by the two sets of transmitting antennas do not interfere with each other.

As shown in FIGS. 5-8, in an embodiment, when operating, the first set of transmitting antennas first transmits millimeter waves starting from the first transmitting antenna on the left, and the predetermined receiving antenna receives a return signal. Then the second transmitting antenna transmits millimeter waves, and the predetermined receiving antenna receives the return signal. Next, the second set of transmitting antennas transmits millimeter waves starting from the first transmitting antenna on the left, and the predetermined receiving antenna receives the return signal. Then the second transmitting antenna transmits millimeter waves, and the predetermined receiving antenna receives the return signal. In this way, the one-dimensional scanning in the first direction is achieved.

In an alternative embodiment, as shown in FIGS. 5-8, the first transmitting antenna in the first set of transmitting antennas transmits millimeter waves, and the predetermined receiving antenna receives the return signal. Then the first transmitting antenna in the second set of transmitting antennas transmits millimeter waves, and the predetermined receiving antenna receives the return signal. Next, the second transmitting antenna in the first set of transmitting antennas transmits millimeter waves, and the receiving antenna receives the return signal. Then, the second transmitting antenna in the second set of transmitting antennas transmits millimeter waves, and the receiving antenna receives the return signal. The operations are carried out in sequence until the last transmitting antenna transmits millimeter waves and the corresponding receiving antenna receives the return signal, thereby achieving the one-dimensional scanning in the first direction.

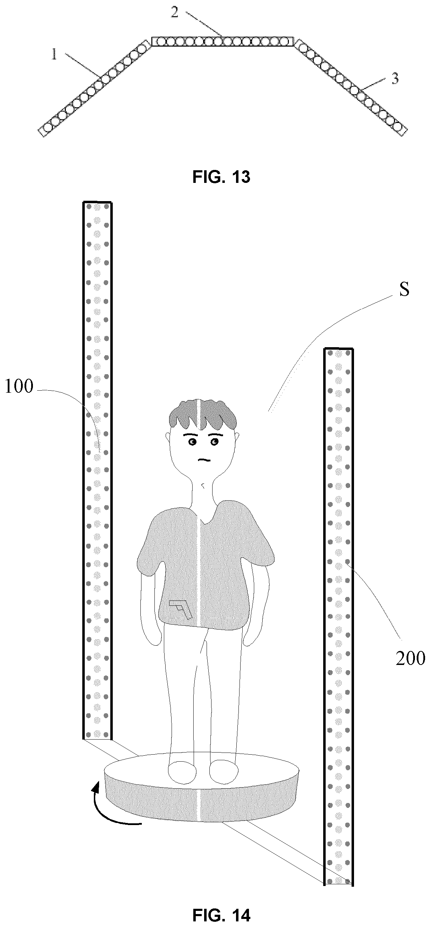

The sparse multiple-input multiple-output array arrangement is configured so that the first set of transmitting antennas and the second set of transmitting antennas sequentially transmit millimeter waves to achieve the scanning of a set of transmitting antennas, and the sparse multiple-input multiple-output array arrangement moves in the second direction relative to the human body under inspection to scan along the second direction. In an example, the relative movement may be that the human body under inspection does not move, and the sparse multiple-input multiple-output array arrangement is translated along the second direction to scan along the second direction, so as to achieve a two-dimensional scanning of the human body under inspection. For example, the sparse multiple-input multiple-output array arrangement scans along the second direction with $0.5\lambda$ steps, as shown in FIGS. 9, 10 and 11. In another example, the relative movement may also be that the sparse multiple-input multiple-output array arrangement does not move, and the human body under inspection rotates relative to the sparse multiple-input multiple-output array, as shown in FIG. 14.

In an embodiment, the sparse multiple-input multiple-output array arrangement is configured to perform the image reconstruction for a correct imaging area at a time based on a Fourier transform-based synthetic aperture holographic algorithm, and the imaging equation is:

$$\sigma\left(x,y\right)=FT_{2D}^{-1}\left[FT_{2D}\left[s\left(x_t,y_t,x_r,y_r,K_\omega\right)\right]e^{-j\sqrt{4k^2-k_x^2-k_y^2}\,R_0}\right]$$

where $\sigma(x, y)$ is a scattering coefficient of the human body, $R_0$ is an imaging distance, $FT_{2D}$ is a two-dimensional Fourier transform, $FT_{2D}^{-1}$ is a two-dimensional inverse Fourier transform, j is an imaginary unit, k is a propagation constant, and $k_y$ are space propagation constants respectively;

$$S(x_t,y_t;x_r,y_r;K_\omega)=\iint\limits_{D}\sigma(x_n,y_n)\exp[-jK_\omega(R_{t,n}+R_{r,n})]dr$$

is an echo signal of the human body received by a pair of transmitting antenna and receiving antenna; $K_\omega$ is a spatial frequency of a frequency stepping signal.

When operating, the plurality of transmitting antennas emit millimeter waves sequentially through the control switch. As shown in FIG. 5, when the first transmitting antenna in the first set of transmitting antennas operates, the first to fourth receiving antennas acquire echo data. When the second transmitting antenna operates, the second to seventh receiving antennas acquire echo data. When the third transmitting antenna operates, the fifth to ninth receiving antennas acquire echo data. When the first transmitting antenna in the second set of transmitting antennas operates, the first to fifth receiving antennas acquire echo data. When the second transmitting antenna operates, the third to eighth receiving antennas acquire echo data. When the third transmitting antenna operates, the sixth to ninth receiving antennas acquire echo data.

After all the transmitting antennas in the first and second sets of transmitting antennas transmit sequentially, a horizontal data acquisition is achieved. According to the above equivalent phase center principle, these echo data may be equivalent to the echo data acquired by the equivalent phase centers. Moreover, the interval between these equivalent phase centers is 0.5λ, which satisfies the equivalent element distribution required by the Nyquist's sampling theory. Then the synthetic aperture scanning, that is, mechanical scanning, is performed in the direction orthogonal to the array, that is, the second direction, to achieve the scanning of the two-dimensional aperture. The scanning step length also needs to satisfy the sampling theory, that is, half wavelength 0.5λ.

After the two-dimensional aperture scanning is performed, the acquired echo data may be expressed as

$$S(x_t,y_t;x_r,y_r;K_\omega)$$

.

Finally, combined with the fast Fourier transform-based synthetic aperture holography algorithm, fast reconstruction may be performed and the imaging is achieved.

The purpose of the imaging algorithm is to reverse the image of the target, that is, the scattering coefficient of the target, from the echo expression. The Fourier transform-based synthetic aperture holographic algorithm does not need to reconstruct the entire imaging area point by point like the backward projection algorithm, but reconstruct the correct imaging area at one time by using the advantages of fast Fourier transform. The imaging equation is:

$$\sigma\left(x,y\right)=FT_{2D}^{-1}\left[FT_{2D}\left[s\left(x_t,y_t,x_r,y_r,K_\omega\right)\right]e^{-j\sqrt{4k^2-k_x^2-k_y^2}\,R_0}\right]$$

where $R_0$ is the imaging distance.

The sparse multiple-input multiple-output array arrangement proposed in the present disclosure is based on the principle of single station equivalence. That is, the array is designed with single station equivalence and combined with the control of the control switch, so that the finally formed equivalent phase center (also called equivalent element or equivalent antenna unit in the present disclosure) satisfies the Nyquist's sampling theory. In other words, the distance between the equivalent antenna units finally formed by the transmit-receive antenna array is slightly greater than or equal to half of the wavelength corresponding to the operating frequency. According to the above principle and considering the short wavelength of high-frequency millimeter wave to take into account the engineering feasibility, the embodiments of the present disclosure employs both the array sparse design and array switch control technology to finally achieve the half-wavelength spacing equivalent antenna unit distribution.

In an embodiment of the present disclosure, there is further provided a human body security inspection apparatus including one or more above-mentioned sparse multiple-input multiple-output array arrangements.

In an embodiment, as shown in FIG. 9, the human body security inspection apparatus includes a first sparse multiple-input multiple-output array arrangement 100 and a second sparse multiple-input multiple-output array arrangement 200. The first sparse multiple-input multiple-output array arrangement and the second sparse multiple-input multiple-output array arrangement are arranged oppositely so as to define an inspection space S therebetween for human body security inspection. The first sparse multiple-input multiple-output array arrangement 100 and the second sparse multiple-input multiple-output array arrangement 200 each includes one or more above-mentioned sparse multiple-input multiple-output array arrangements.

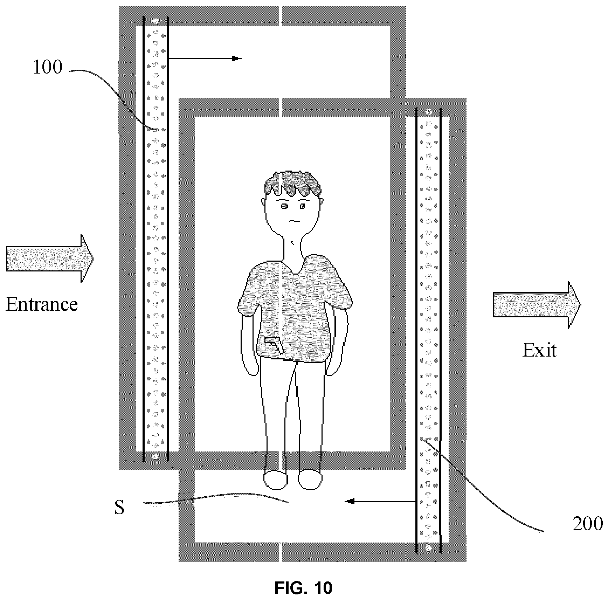

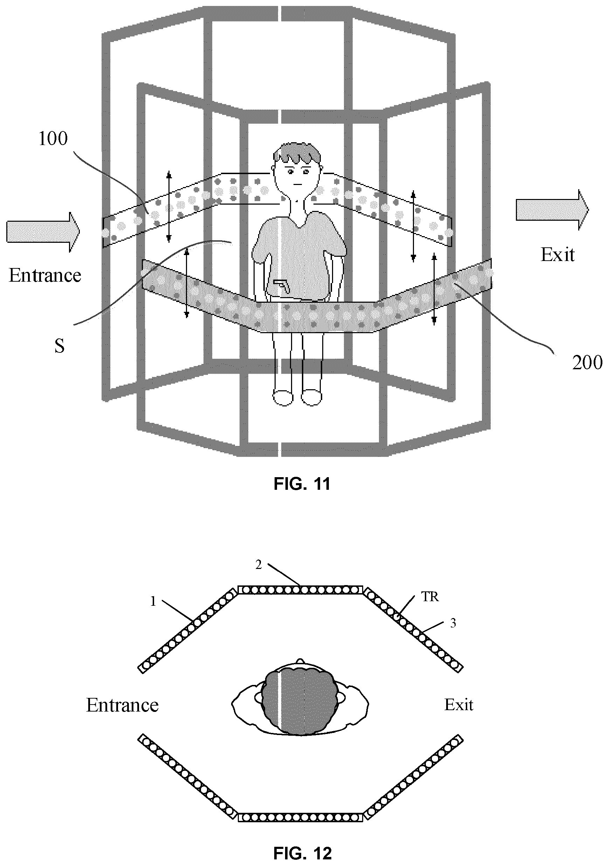

In an embodiment, in case of a plurality of sparse multiple-input multiple-output array arrangements, the plurality of sparse multiple-input multiple-output array arrangements are sequentially arranged along the second direction. The second direction can be the vertical direction as shown in FIG. 9. The arrangement direction of the transmitting antennas and the receiving antennas (i.e., the first direction) can be the horizontal direction. In addition, the second direction may also be the horizontal direction as shown in FIGS. 10 and 14, and the arrangement direction of the transmitting antennas and the receiving antennas (i.e., the first direction) can be the vertical direction. In another embodiment, in case of a plurality of sparse multiple-input multiple-output array arrangements, the plurality of sparse multiple-input multiple-output array arrangements are sequentially arranged in sections along the first direction, as shown in FIG. 11. In the embodiment shown in FIGS. 11-13, the plurality of sparse multiple-input multiple-output array arrangements are sequentially arranged in three sections along the first direction. A second section 2 of the sparse multiple-input multiple-output array arrangements has two ends connected to a first section 1 of the sparse multiple-input multiple-output array arrangements and a third section 3 of the sparse multiple-input multiple-output array arrangements so as to form a broken line. As shown in FIGS. 12 and 13, an angle between the second section 2 of the sparse multiple-input multiple-output array arrangements and the first section 1 of the sparse multiple-input multiple-output array arrangements ranges from 90° to 170°, and an angle between the second section 2 of the sparse multiple-input multiple-output array arrangements and the third section 3 of the sparse multiple-input multiple-output array arrangements ranges from 90° to 170°. The embodiment shown in FIG. 11 provides a millimeter wave three-dimensional holographic scanning imaging apparatus, including at least 6 transmit-receive arrays. The composition is shown in the top view of FIG. 12. The first, second and third sections 1, 2 and 3 of the sparse multiple-input multiple-output array arrangements all adopt multiple-input multiple-output array arrangement. The length of the three sections ranges from 0.3 m to 0.8 m, that is, a normal person can stand within a radius of the area enclosed by the three sections. The six transmit-receive arrays perform mechanical scanning in the vertical direction, and the step length of the mechanical scanning is selected as the half wavelength of the operating wavelength. After the entire human body is scanned, the complete scattering field data is obtained and then transmitted to the data processing unit. The reconstruction is performed by the holographic algorithm, and the image of the human body under inspection is formed. Finally, the image is transmitted to a display unit.

In order to achieve the two-dimensional scanning of the sparse multiple-input multiple-output array arrangement, in one embodiment, the first sparse multiple-input multiple-output array arrangement 100 and the second sparse multiple-input multiple-output array arrangement 200 can be translated in the second direction. As shown in FIG. 9, the first direction is the horizontal direction and the second direction is the vertical direction, or as shown in FIG. 10, the first direction is the vertical direction and the second direction is the horizontal direction. In an embodiment, in order to avoid interference of the millimeter waves emitted by the first sparse multiple-input multiple-output array arrangement 100 and the second sparse multiple-input multiple-output array arrangement 200, it is preferable to make the first sparse multiple-input multiple-output array arrangement 100 and the second sparse multiple-input multiple-output array arrangement 200 spatially separated during scanning. For example, in the embodiment shown in FIG. 9, the first sparse multiple-input multiple-output array arrangement 100 scans from top to bottom in the vertical plane where it is located, and the second sparse multiple-input multiple-output array arrangement 200 scans from bottom to top in the vertical plane where it is located. In the embodiment shown in FIG. 10, the first sparse multiple-input multiple-output array arrangement 100 scans from left to right in the vertical plane where it is located, and the second sparse multiple-input multiple-output array arrangement 200 scans from right to left in the vertical plane where it is located.

In another embodiment, in order to achieve the two-dimensional scanning of the sparse multiple-input multiple-output array arrangement, the sparse multiple-input multiple-output array arrangement is not translated. Instead, as shown in FIG. 14, the human body under inspection can stand parallel to the first direction in the defined inspection space and can rotate at any angle, and the first direction is the vertical direction, and the second direction is the horizontal direction. The angle of rotation is preferably 360°.

During the whole process of scanning the object under inspection by the first sparse multiple-input multiple-output array arrangement 100 and the second sparse multiple-input multiple-output array arrangement 200 together, the frequencies of the millimeter waves emitted by the first sparse multiple-input multiple-output array arrangement 100 and the second sparse multiple-input multiple-output array arrangement 200 cannot interfere with each other. In an embodiment, when the scanning starts, by controlling the switch, the transmitting antennas in the first sparse multiple-input multiple-output array arrangement 100 sequentially emit millimeter wave signals, and the transmitting antennas in the second sparse multiple-input multiple-output array arrangement 200 sequentially transmit millimeter-wave signals after all transmitting antennas in the first sparse multiple-input multiple-output array arrangement 100 transmit millimeter wave signals. Therefore, the first sparse multiple-input multiple-output array arrangement 100 and the second sparse multiple-input multiple-output array arrangement 200 transmit signals in different time, and thus will not interfere with each other. In another embodiment, when the scanning starts, by controlling the switch, the first sparse multiple-input multiple-output array arrangement 100 transmits millimeter waves from the lowest frequency to the highest frequency, while the second sparse multiple-input multiple-output array arrangement 200 transmits millimeter waves from the highest frequency to the lowest frequency; Alternatively, the second sparse multiple-input multiple-output array arrangement 200 transmits millimeter waves from the lowest frequency to the highest frequency, while the first sparse multiple-input multiple-output array arrangement 100 transmits millimeter waves from the highest frequency to the lowest frequency. Therefore, at the same time, the frequency of the millimeter waves transmitted by the first sparse multiple-input multiple-output array arrangement 100 is different from that of the second sparse multiple-input multiple-output array arrangement 200, so as not to interfere with each other.

In this embodiment, the first sparse multiple-input multiple-output array arrangement 100 and the second sparse multiple-input multiple-output array arrangement 200 may scan separately, and the scanning signals of both are used to form the image of the human body.

When the human body security inspection apparatus of the present disclosure is used to perform security inspection on the human body, such as passenger, it is only necessary for the human body to stay in the human body security inspection apparatus, that is, between the first sparse multiple-input multiple-output array arrangement 100 and the second sparse multiple-input multiple-output array arrangement 200. The first sparse multiple-input multiple-output array arrangement 100 and the second sparse multiple-input multiple-output array arrangement 200 scan one side of the human body at the same or different time, and transmit the scanning signal to a processor or controller. The processor or controller performs image processing to form the image of the human body, thereby achieving convenient and quick inspection.

In an embodiment of the present disclosure, there is further provided a human body security inspection method using the above-mentioned sparse multiple-input multiple-output array arrangement.

The scope of the present invention is defined by the claims.

**Claims**

1. A human body security inspection apparatus comprising a first assembly (100) of sparse multiple-input multiple-output array arrangements (100) and a second assembly (200) of sparse multiple-input multiple-output array arrangements (200) which are arranged oppositely to define an inspection space (S) therebetween for human body security inspection,

   wherein each of the first assembly (100) of sparse multiple-input multiple-output array arrangements and the second assembly (200) of sparse multiple-input multiple-output array arrangements comprises a plurality of sparse multiple-input multiple-output array arrangements for active millimeter wave security imaging,
   wherein the plurality of sparse multiple-input multiple-output array arrangements are sequentially arranged in three adjacent sections along the first direction (D1), a second section of the sparse multiple-input multiple-output array arrangements has two ends connected to a first section of the sparse multiple-input multiple-output array arrangements and a third section of the sparse multiple-input multiple-output array arrangements respectively so as to form a broken line;
   wherein an angle between the second section (2) of the sparse multiple-input multiple-output array arrangements and the first section (1) of the sparse multiple-input multiple-output array arrangements ranges from 90° to 170°; and an angle between the second section (2) of the sparse multiple-input multiple-output array arrangements and the third section (3) of the sparse multiple-input multiple-output array arrangements ranges from 90° to 170°;
   wherein the first sparse multiple-input multiple-output array arrangement (100) and the second sparse multiple-input multiple-output array arrangement (200) are translatable in a second direction, said second direction (D2) being perpendicular to the first direction (D1);
   wherein, in use of the human body security inspection apparatus, the first direction (D1) is a horizontal direction and the second direction (D2) is a vertical direction,
   wherein the sparse multiple-input multiple-output array arrangement comprises two sets of transmitting antennas (T) for transmitting millimeter waves and a set of receiving antennas (R) for receiving the millimeter waves transmitted by the two sets of transmitting antennas (T) and reflected by a human body, the millimeter waves having a wavelength at millimeter level;

wherein the two sets of transmitting antennas (T) comprise a first set of transmitting antennas and a second set of transmitting antennas, each set of transmitting antennas comprising a plurality of transmitting antennas arranged along the first direction (D1);

wherein the set of receiving antennas (R) comprises a plurality of receiving antennas arranged along the first direction (D1) such that an arrangement direction of the set of receiving antennas is parallel to an arrangement direction of the first set of transmitting antennas and an arrangement direction of the second set of transmitting antennas;

wherein the set of receiving antennas (R) is located in the same plane as the first set of transmitting antennas and the second set of transmitting antennas, and is located between the first set of transmitting antennas and the second set of transmitting antennas in the second direction (D2), and a distance (dtr) between the first set of transmitting antennas and the set of receiving antennas in the second direction is equal to a distance (dtr) between the second set of transmitting antennas and the set of receiving antennas in the second direction (D2),

wherein adjacent transmitting antennas (T) in the first set of transmitting antennas are spaced apart by a distance of $M\lambda$ and adjacent transmitting antennas (T) in the second set of transmitting antennas are spaced apart by the distance of $M\lambda$, where $\lambda$ is the wavelength of the millimeter waves, and M is an even number greater than or equal to 2, and adjacent receiving antennas (R) in the set of receiving antennas are spaced apart by a distance of $2\lambda$;

wherein a distance between any one transmitting antenna (T) in the first set of transmitting antennas and one corresponding transmitting antenna closest to said one transmitting antenna in the second set of transmitting antennas in the first direction (D1) is equal to the wavelength $\lambda$;

wherein a connection line between any one transmitting antenna (T) in the first set of transmitting antennas and a corresponding receiving antenna (R) closest to said any one transmitting antenna (T) in the first set of transmitting antennas is not perpendicular to the first direction (D1), and a connection line between the corresponding transmitting antenna in the second set of transmitting antennas closest to said any one transmitting antenna (T) in the first set of transmitting antennas and the corresponding receiving antenna (R) closest to said any one transmitting antenna (T) in the first set of transmitting antennas is not perpendicular to the first direction (D1),

**characterized in that**

a connection line between said any one transmitting antenna (T) in the first set of transmitting antennas and the corresponding transmitting antenna in the second set of transmitting antennas closest to said any one transmitting antenna (T) in the first set of transmitting antennas is not perpendicular to the first direction (D1).

2. The human body security inspection apparatus according to claim 1, wherein

in the set of receiving antennas (R), at least one receiving antenna is arranged within range having a length equal to a spacing between two adjacent transmitting antennas (T) in the first set of transmitting antennas, such that the number of transmitting antennas (T) in the first set of transmitting antennas is equal to or less than the number of receiving antennas (R) in the set of receiving antennas; and

in the set of receiving antennas, at least one receiving antenna is arranged within range having a length equal to a spacing between two adjacent transmitting antennas in the second set of transmitting antennas, such that the number of transmitting antennas in the second set of transmitting antennas is equal to or less than the number of receiving antennas in the set of receiving antennas.

3. The human body security inspection apparatus according to claim 1, wherein

a midpoint of a connection line between one transmitting antenna in the first set of transmitting antennas and one of a plurality of receiving antennas closest to said one transmitting antenna in the set of receiving antennas is determined as a virtual equivalent phase center of a pair of said one transmitting antenna and said one receiving antenna, a distance between adjacent equivalent phase centers in the first direction (D1) is equal to the wavelength of the millimeter waves;

the plurality of transmitting antennas in the first set of transmitting antennas and the plurality of receiving antennas in the set of receiving antennas form a first set of equivalent phase centers; and

a midpoint of a connection line between one transmitting antenna in the second set of transmitting antennas and one receiving antenna of a plurality of receiving antennas closest to said one transmitting antenna in the set of receiving antennas is determined as a virtual equivalent phase center of a pair of said one transmitting antenna and said one receiving antenna, a distance between adjacent equivalent phase centers in the first direction is equal to the wavelength of the millimeter waves; and

the plurality of transmitting antennas in the second set of transmitting antennas and the plurality of receiving antennas in the set of receiving antennas form a second set of equivalent phase centers.

4. The human body security inspection apparatus according to claim 3, wherein a distance between any equivalent phase center in the first set of equivalent phase centers and an equivalent phase center closest to said any equivalent phase center in the second set of equivalent phase centers in the first direction is 0.3 to 0.7 times the wavelength of the millimeter waves.

5. The human body security inspection apparatus according to claim 3, wherein a distance between any equivalent phase center in the first set of equivalent phase centers and an equivalent phase center closest to said any equivalent phase center in the second set of equivalent phase centers in the first direction is 0.5 times the wavelength of the millimeter waves; or

   wherein a distance between the first set of transmitting antennas and the second set of transmitting antennas is less than 10% of an imaging distance.

6. The human body security inspection apparatus according to claim 1, wherein the transmitting antennas in the first set of transmitting antennas are configured to emit millimeter waves sequentially, and the transmitting antennas in the second set of transmitting antennas are configured to emit millimeter waves sequentially and asynchronously with the transmitting antennas in the first set of transmitting antennas.

7. The human body security inspection apparatus according to claim 6, wherein the sparse multiple-input multiple-output array arrangement is configured to perform scanning along the second direction by moving in the second direction with respect to the human body to be inspected.

8. The human body security inspection apparatus according to claim 7, wherein the sparse multiple-input multiple-output array arrangement is further configured to implement an image reconstruction for a correct imaged area in one time based on a Fourier transform-based synthetic aperture holographic algorithm by using an imaging equation:

$$\sigma(x, y) = FT_{2D}^{-1}\left[ FT_{2D}\left[ s(x_t, y_t, x_r, y_r, K_\omega) \right] e^{-j\sqrt{4k^2 - k_x^2 - k_y^2} R_0} \right]$$

where $\sigma(x, y)$ is a scattering coefficient of the human body, $R_0$ is an imaging distance, $FT_{2D}$ is a two-dimensional Fourier transform, $FT_{2D}^{-1}$ is a two-dimensional inverse Fourier transform, j is an imaginary unit, k is a propagation constant, $k_x$ and $k_y$ are space propagation constants respectively,

$$S(x_t, y_t; x_r, y_r; K_\omega) = \iint_D \sigma(x_n, y_n) \exp[-jK_\omega(R_{t,n} + R_{r,n})] dr$$

is an echo signal from the human body received by a pair of transmitting antenna and receiving antenna; $K_\omega$ is a spatial frequency of a frequency stepping signal; for a point target in a target area, I represents a scattered point target at $I(x_n, y_n)$, a distance between I and a transmitting antenna $A_t$ is defined as $R_{t,n}$, and a distance between I and a receiving antenna $A_r$ is defined as $R_{r,n}$.

9. The human body security inspection apparatus according to claim 1,
   wherein the first sparse multiple-input multiple-output array arrangement (100) is configured to emit millimeter waves from a lowest frequency to a highest frequency and the second sparse multiple-input multiple-output array arrangement (200) is configured to emit millimeter waves from the highest frequency to the lowest frequency, or the second sparse multiple-input multiple-output array arrangement (200) is configured to emit millimeter waves from the lowest frequency to the highest frequency and the first sparse multiple-input multiple-output array arrangement (100) is configured to emit millimeter waves from the highest frequency to the lowest frequency.

**Patentansprüche**

1. Vorrichtung zur Sicherheitsinspektion eines menschlichen Körpers, umfassend eine erste Anordnung (100) von spärlichen Mehrantennen-Eingabe-/Ausgabe-Arrayanordnungen (100) und eine zweite Anordnung (200) von spärlichen Mehrantennen-Eingabe-/Ausgabe-Arrayanordnungen (200), die einander gegenüberliegend angeordnet sind, um einen Inspektionsraum (S) dazwischen für die Sicherheitsinspektion des menschlichen Körpers zu definieren,

wobei jede der ersten Anordnung (100) von spärlichen Mehrantennen-Eingabe-/Ausgabe-Arrayanordnungen und der zweiten Anordnung (200) von spärlichen Mehrantennen-Eingabe-/Ausgabe-Arrayanordnungen eine Vielzahl von spärlichen Mehrantennen-Eingabe-/Ausgabe-Arrayanordnungen für aktives Millimeterwellen-Sicherheitsimaging umfasst,

wobei die Vielzahl von spärlichen Mehrantennen-Eingabe-/Ausgabe-Arrayanordnungen in drei benachbarten Abschnitten entlang der ersten Richtung (D1) sequenziell angeordnet sind, ein zweiter Abschnitt der spärlichen Mehrantennen-Eingabe-/Ausgabe-Arrayanordnungen zwei Enden aufweist, die jeweils mit einem ersten Abschnitt der spärlichen Mehrantennen-Eingabe-/Ausgabe-Arrayanordnungen und einem dritten Abschnitt der spärlichen Mehrantennen-Eingabe-/Ausgabe-Arrayanordnungen verbunden sind, um eine gebrochene Linie zu bilden;

wobei ein Winkel zwischen dem zweiten Abschnitt (2) der spärlichen Mehrantennen-Eingabe-/Ausgabe-Arrayanordnungen und dem ersten Abschnitt (1) der spärlichen Mehrantennen-Eingabe-/Ausgabe-Arrayanordnungen zwischen 90° und 170° liegt; und ein Winkel zwischen dem zweiten Abschnitt (2) der spärlichen Mehrantennen-Eingabe-/Ausgabe-Arrayanordnungen und dem dritten Abschnitt (3) der spärlichen Mehrantennen-Eingabe-/Ausgabe-Arrayanordnungen zwischen 90° und 170° liegt;

wobei die erste spärliche Mehrantennen-Eingabe-/Ausgabe-Arrayanordnung (100) und die zweite spärliche Mehrantennen-Eingabe-/Ausgabe-Arrayanordnung (200) in einer zweiten Richtung verschiebbar sind, wobei die zweite Richtung (D2) senkrecht zur ersten Richtung (D1) steht;

wobei bei Verwendung der Vorrichtung zur Sicherheitsinspektion des menschlichen Körpers die erste Richtung (D1) eine horizontale Richtung und die zweite Richtung (D2) eine vertikale Richtung ist,

wobei die spärliche Mehrantennen-Eingabe-/Ausgabe-Arrayanordnung zwei Sätze von Sendeantennen (T) zum Senden von Millimeterwellen und einen Satz von Empfangsantennen (R) zum Empfangen der von den zwei Sätzen von Sendeantennen (T) gesendeten und vom menschlichen Körper reflektierten Millimeterwellen umfasst, wobei die Millimeterwellen eine Wellenlänge im Millimeterbereich haben;

wobei die zwei Sätze von Sendeantennen (T) einen ersten Satz von Sendeantennen und einen zweiten Satz von Sendeantennen umfassen, wobei jeder Satz von Sendeantennen eine Vielzahl von Sendeantennen umfasst, die entlang der ersten Richtung (D1) angeordnet sind;

wobei der Satz von Empfangsantennen (R) eine Vielzahl von Empfangsantennen umfasst, die entlang der ersten Richtung (D1) angeordnet sind, sodass eine Anordnungsrichtung des Satzes von Empfangsantennen parallel zu einer Anordnungsrichtung des ersten Satzes von Sendeantennen und einer Anordnungsrichtung des zweiten Satzes von Sendeantennen ist;

wobei der Satz von Empfangsantennen (R) in derselben Ebene wie der erste Satz von Sendeantennen und der zweite Satz von Sendeantennen angeordnet ist und in der zweiten Richtung (D2) zwischen dem ersten Satz von Sendeantennen und dem zweiten Satz von Sendeantennen angeordnet ist, und ein Abstand (dtr) zwischen dem ersten Satz von Sendeantennen und dem Satz von Empfangsantennen in der zweiten Richtung gleich einem Abstand (dtr) zwischen dem zweiten Satz von Sendeantennen und dem Satz von Empfangsantennen in der zweiten Richtung (D2) ist,

wobei benachbarte Sendeantennen (T) im ersten Satz von Sendeantennen durch einen Abstand von $M\lambda$ getrennt sind und benachbarte Sendeantennen (T) im zweiten Satz von Sendeantennen durch den Abstand von $M\lambda$ getrennt sind, wobei $\lambda$ die Wellenlänge der Millimeterwellen ist und M eine gerade Zahl größer oder gleich 2 ist, und benachbarte Empfangsantennen (R) im Satz von Empfangsantennen durch einen Abstand von $2\lambda$ getrennt sind;

wobei ein Abstand zwischen einer beliebigen Sendeantenne (T) im ersten Satz von Sendeantennen und einer entsprechenden, dieser beliebigen Sendeantenne in der ersten Richtung (D1) nächstgelegenen Sendeantenne im zweiten Satz von Sendeantennen gleich der Wellenlänge $\lambda$ ist;

wobei eine Verbindungslinie zwischen einer beliebigen Sendeantenne (T) im ersten Satz von Sendeantennen und einer entsprechenden Empfangsantenne (R), die dieser beliebigen Sendeantenne (T) im ersten Satz von Sendeantennen am nächsten liegt, nicht senkrecht zur ersten Richtung (D1) steht, und eine Verbindungslinie zwischen der entsprechenden Sendeantenne im zweiten Satz von Sendeantennen, die dieser beliebigen Sendeantenne (T) im ersten Satz von Sendeantennen am nächsten liegt, und der entsprechenden Empfangsantenne (R), die dieser beliebigen Sendeantenne (T) im ersten Satz von Sendeantennen am nächsten liegt, nicht senkrecht zur ersten Richtung (D1) steht,

**dadurch gekennzeichnet, dass**

eine Verbindungslinie zwischen dieser beliebigen Sendeantenne (T) im ersten Satz von Sendeantennen und der entsprechenden Sendeantenne im zweiten Satz von Sendeantennen, die dieser beliebigen Sendeantenne (T) im ersten Satz von Sendeantennen am nächsten liegt, nicht senkrecht zur ersten Richtung (D1) steht.

2. Vorrichtung zur Sicherheitsinspektion des menschlichen Körpers nach Anspruch 1, wobei

im Satz von Empfangsantennen (R) mindestens eine Empfangsantenne innerhalb eines Bereichs angeordnet ist, dessen Länge gleich einem Abstand zwischen zwei benachbarten Sendeantennen (T) im ersten Satz von Sendeantennen ist, sodass die Anzahl der Sendeantennen (T) im ersten Satz von Sendeantennen gleich oder kleiner ist als die Anzahl der Empfangsantennen (R) im Satz von Empfangsantennen; und

im Satz von Empfangsantennen mindestens eine Empfangsantenne innerhalb eines Bereichs angeordnet ist, dessen Länge gleich einem Abstand zwischen zwei benachbarten Sendeantennen im zweiten Satz von Sendeantennen ist, sodass die Anzahl der Sendeantennen im zweiten Satz von Sendeantennen gleich oder kleiner ist als die Anzahl der Empfangsantennen im Satz von Empfangsantennen.

3. Vorrichtung zur Sicherheitsinspektion des menschlichen Körpers nach Anspruch 1, wobei

ein Mittelpunkt einer Verbindungslinie zwischen einer Sendeantenne im ersten Satz von Sendeantennen und einer der Vielzahl von Empfangsantennen, die dieser Sendeantenne im Satz von Empfangsantennen am nächsten liegt, als virtuelles äquivalentes Phasenzentrum eines Paars dieser Sendeantenne und dieser Empfangsantenne bestimmt wird, ein Abstand zwischen benachbarten äquivalenten Phasenzentren in der ersten Richtung (D1) gleich der Wellenlänge der Millimeterwellen ist;

die Vielzahl von Sendeantennen im ersten Satz von Sendeantennen und die Vielzahl von Empfangsantennen im Satz von Empfangsantennen einen ersten Satz von äquivalenten Phasenzentren bilden; und

ein Mittelpunkt einer Verbindungslinie zwischen einer Sendeantenne im zweiten Satz von Sendeantennen und einer Empfangsantenne der Vielzahl von Empfangsantennen, die dieser Sendeantenne im Satz von Empfangsantennen am nächsten liegt, als virtuelles äquivalentes Phasenzentrum eines Paars dieser Sendeantenne und dieser Empfangsantenne bestimmt wird, ein Abstand zwischen benachbarten äquivalenten Phasenzentren in der ersten Richtung gleich der Wellenlänge der Millimeterwellen ist; und

die Vielzahl von Sendeantennen im zweiten Satz von Sendeantennen und die Vielzahl von Empfangsantennen im Satz von Empfangsantennen einen zweiten Satz von äquivalenten Phasenzentren bilden.

4. Vorrichtung zur Sicherheitsinspektion des menschlichen Körpers nach Anspruch 3, wobei ein Abstand zwischen einem beliebigen äquivalenten Phasenzentrum im ersten Satz von äquivalenten Phasenzentren und einem diesem beliebigen äquivalenten Phasenzentrum in der ersten Richtung nächstgelegenen äquivalenten Phasenzentrum im zweiten Satz von äquivalenten Phasenzentren 0,3- bis 0,7-mal der Wellenlänge der Millimeterwellen beträgt.

5. Vorrichtung zur Sicherheitsinspektion des menschlichen Körpers nach Anspruch 3, wobei ein Abstand zwischen einem beliebigen äquivalenten Phasenzentrum im ersten Satz von äquivalenten Phasenzentren und einem diesem beliebigen äquivalenten Phasenzentrum in der ersten Richtung nächstgelegenen äquivalenten Phasenzentrum im zweiten Satz von äquivalenten Phasenzentren 0,5-mal der Wellenlänge der Millimeterwellen beträgt; oder wobei ein Abstand zwischen dem ersten Satz von Sendeantennen und dem zweiten Satz von Sendeantennen kleiner als 10 % einer Bildgebungsdistanz ist.

6. Vorrichtung zur Sicherheitsinspektion des menschlichen Körpers nach Anspruch 1, wobei die Sendeantennen im ersten Satz von Sendeantennen dazu ausgelegt sind, Millimeterwellen sequenziell auszusenden, und die Sendeantennen im zweiten Satz von Sendeantennen dazu ausgelegt sind, Millimeterwellen sequenziell und asynchron mit den Sendeantennen im ersten Satz von Sendeantennen auszusenden.

7. Vorrichtung zur Sicherheitsinspektion des menschlichen Körpers nach Anspruch 6, wobei die spärliche Mehrantennen-Eingabe-/Ausgabe-Arrayanordnung dazu ausgelegt ist, ein Scannen entlang der zweiten Richtung durchzuführen, indem sie sich in der zweiten Richtung relativ zu dem zu inspizierenden menschlichen Körper bewegt.

8. Vorrichtung zur Sicherheitsinspektion des menschlichen Körpers nach Anspruch 7, wobei die spärliche Mehrantennen-Eingabe-/Ausgabe-Arrayanordnung ferner dazu ausgelegt ist, eine Bildrekonstruktion für ein korrekt abgebildetes Gebiet in einem Schritt basierend auf einem Fourier-Transformations-basierten synthetischen Apertur-Holographie-Algorithmus unter Verwendung einer Bildgebungsgleichung durchzuführen:

$$\sigma(x,y) = FT_{2D}^{-1}\left[ FT_{2D}\left[ s\left(x_t, y_t, x_r, y_r, \mathrm{K}_\omega\right)\right] e^{-j\sqrt{4k^2 - k_x^2 - k_y^2}R_0}\right]$$

wobei $\sigma(x, y)$ ein Streukoeffizient des menschlichen Körpers ist, $R_0$ eine Bildgebungsdistanz ist, $FT_{2D}$ eine zweidimensionale Fourier-Transformation ist, $FT_{2D}^{-1}$ eine zweidimensionale inverse Fourier-Transformation ist, j eine imaginäre Einheit ist, k eine Ausbreitungskonstante ist, $k_x$ und $k_y$ jeweils räumliche Ausbreitungskonstanten sind,

$$S(x_t, y_t; x_r, y_r; K_\omega) = \iint_D \sigma(x_n, y_n)\exp\left[-jK_\omega(R_{t,n} + R_{r,n})\right]dr$$

ein Echosignal vom menschlichen Körper ist, das von einem Paar aus Sendeantenne und Empfangsantenne empfangen wird; $K_\omega$ eine räumliche Frequenz eines Frequenzsprungsignals ist; für ein Punktziel in einem Zielgebiet bezeichnet I ein gestreutes Punktziel bei $I(x_n,y_n)$, ein Abstand zwischen I und einer Sendeantenne At ist als $R_{t,n}$ definiert, und ein Abstand zwischen I und einer Empfangsantenne $A_r$ ist als $R_{r,n}$ definiert.

9. Vorrichtung zur Sicherheitsinspektion des menschlichen Körpers nach Anspruch 1,
wobei die erste spärliche Mehrantennen-Eingabe-/Ausgabe-Arrayanordnung (100) dazu ausgelegt ist, Millimeterwellen von einer niedrigsten Frequenz zu einer höchsten Frequenz auszusenden, und die zweite spärliche Mehrantennen-Eingabe-/Ausgabe-Arrayanordnung (200) dazu ausgelegt ist, Millimeterwellen von der höchsten Frequenz zur niedrigsten Frequenz auszusenden, oder wobei die zweite spärliche Mehrantennen-Eingabe-/Ausgabe-Arrayanordnung (200) dazu ausgelegt ist, Millimeterwellen von einer niedrigsten Frequenz zu einer höchsten Frequenz auszusenden, und die erste spärliche Mehrantennen-Eingabe-/Ausgabe-Arrayanordnung (100) dazu ausgelegt ist, Millimeterwellen von der höchsten Frequenz zur niedrigsten Frequenz auszusenden.


**Revendications**

1. Appareil d'inspection de sécurité de corps humain comprenant un premier ensemble (100) de rangées entrées multiples et sorties multiples espacées (100) et un deuxième ensemble (200) de rangées entrées multiples et sorties multiples espacées (200) qui sont disposés face à face afin de former entre eux un espace d'inspection (S) destiné à l'inspection du corps humain,

dans lequel le premier ensemble (100) de rangées entrées multiples et sorties multiples espacées et du deuxième ensemble (200) de rangées entrées multiples et sorties multiples espacées comprend une pluralité d'ensembles de rangées entrées multiples et sorties multiples espacées pour l'imagerie de sécurité active à ondes millimétriques,
dans lequel la pluralité de rangées entrées multiples et sorties multiples espacées sont agencées séquentiellement en trois sections adjacentes le long de la première direction (D1), une deuxième section des rangées entrées multiples et sorties multiples espacées a deux extrémités connectées respectivement à une première section des rangées entrées multiples et sorties multiples espacées et à une troisième section des rangées entrées multiples et sorties multiples de espacées manière à former une ligne discontinue;
dans lequel l'angle entre la deuxième section (2) des rangées entrées multiples et sorties multiples espacées et la première section (1) des rangées entrées multiples et sorties multiples espacées est compris entre 90° et 170°; et l'angle entre la deuxième section (2) des rangées entrées multiples et sorties multiples espacées et la troisième section (3) des rangées entrées multiples et sorties multiples espacées est compris entre 90° et 170°;
dans lequel l'ensemble de rangées entrées multiples et sorties multiples espacées (100) et le deuxième ensemble de rangées entrées multiples et sorties multiples espacées (200) peuvent être déplacés dans une deuxième direction, ladite deuxième direction (D2) étant perpendiculaire à la première direction (D1);
dans lequel, lors de l'utilisation de l'appareil d'inspection de sécurité de corps humain, la première direction (D1) est une direction horizontale et la deuxième direction (D2) est une direction verticale,
dans lequel l'ensemble de rangées entrées multiples et sorties multiples espacées comprend deux ensembles d'antennes d'émission (T) pour émettre des ondes millimétriques et un ensemble d'antennes de réception (R) pour recevoir les ondes millimétriques émises par les deux ensembles d'antennes d'émission (T) et réfléchies par un corps humain, les ondes millimétriques ayant une longueur d'onde de l'ordre du millimètre;

dans lequel les deux ensembles d'antennes d'émission (T) comprennent un premier ensemble d'antennes d'émission et un deuxième ensemble d'antennes d'émission, chaque ensemble d'antennes d'émission comprenant une pluralité d'antennes d'émission disposées le long de la première direction (D1);

dans lequel l'ensemble d'antennes de réception (R) comprend une pluralité d'antennes de réception disposées le long de la première direction (D1) de telle sorte qu'une direction de disposition de l'ensemble d'antennes de réception soit parallèle à une direction de disposition du premier ensemble d'antennes d'émission et à une direction de disposition du deuxième ensemble d'antennes d'émission;

dans lequel l'ensemble d'antennes de réception (R) est situé dans le même plan que le premier ensemble d'antennes d'émission et le deuxième ensemble d'antennes d'émission, et est situé entre le premier ensemble d'antennes d'émission et le deuxième ensemble d'antennes d'émission dans la deuxième direction (D2), et une distance (dtr) entre le premier ensemble d'antennes d'émission et l'ensemble d'antennes de réception dans la deuxième direction est égale à une distance (dtr) entre le deuxième ensemble d'antennes d'émission et l'ensemble d'antennes de réception dans la deuxième direction (D2), dans lequel les antennes d'émission adjacentes (T) du premier ensemble d'antennes d'émission sont espacées d'une distance $M\lambda$ et les antennes d'émission adjacentes (T) du deuxième ensemble d'antennes d'émission sont espacées d'une distance $M\lambda$, $\lambda$ étant la longueur d'onde des ondes millimétriques, et M étant un nombre pair supérieur ou égal à 2, et les antennes de réception adjacentes (R) dans l'ensemble d'antennes de réception sont espacées d'une distance de $2\lambda$;

dans lequel la distance entre une quelconque antenne d'émission (T) du premier ensemble d'antennes d'émission et une antenne d'émission correspondante la plus proche de ladite antenne d'émission dans le deuxième ensemble d'antennes d'émission dans la première direction (D1) est égale à la longueur d'onde $\lambda$;

dans lequel une ligne de connexion entre une quelconque antenne d'émission (T) du premier ensemble d'antennes d'émission et une antenne de réception correspondante (R) la plus proche de ladite quelconque antenne d'émission (T) du premier ensemble d'antennes d'émission n'est pas perpendiculaire à la première direction (D1), et une ligne de connexion entre l'antenne d'émission correspondante dans le deuxième ensemble d'antennes d'émission la plus proche de ladite quelconque antenne d'émission (T) dans le premier ensemble d'antennes d'émission et l'antenne réceptrice (R) correspondante la plus proche de ladite quelconque antenne d'émission (T) dans le premier ensemble d'antennes d'émission n'est pas perpendiculaire à la première direction (D1),

**caractérisé en ce**

**qu'**une ligne de connexion entre ladite quelconque antenne d'émission (T) dans le premier ensemble d'antennes d'émission et l'antenne d'émission correspondante dans le deuxième ensemble d'antennes d'émission le plus proche de ladite quelconque antenne d'émission (T) dans le premier ensemble d'antennes d'émission n'est pas perpendiculaire à la première direction (D1).

2. Appareil d'inspection de sécurité de corps humain selon la revendication 1, dans lequel

dans l'ensemble d'antennes de réception (R), au moins une antenne de réception est disposée à une distance qui est égale à l'espace entre deux antennes d'émission adjacentes (T) dans le premier ensemble d'antennes d'émission, de telle sorte que le nombre d'antennes d'émission (T) dans le premier ensemble d'antennes d'émission soit inférieur ou égal au nombre d'antennes de réception (R) dans l'ensemble d'antennes de réception; et

dans l'ensemble d'antennes de réception, au moins une antenne de réception est disposée à une distance qui est égale à l'espace entre deux antennes d'émission adjacentes dans le deuxième ensemble d'antennes d'émission, de telle sorte que le nombre d'antennes d'émission dans le deuxième ensemble d'antennes d'émission soit inférieur ou égal au nombre d'antennes de réception dans l'ensemble d'antennes de réception.

3. Appareil d'inspection de sécurité de corps humain selon la revendication 1, dans lequel

le point médian d'une ligne de connexion entre une antenne d'émission du premier ensemble d'antennes d'émission et l'une parmi la pluralité d'antennes de réception la plus proche de ladite antenne d'émission dans l'ensemble d'antennes de réception est déterminé comme étant le centre de phase équivalent virtuel d'une paire constituée de ladite antenne d'émission et de ladite antenne de réception, la distance entre les centres de phase équivalents adjacents dans la première direction (D1) étant égale à la longueur d'onde des ondes millimétriques;

la pluralité d'antennes d'émission dans le premier ensemble d'antennes d'émission et la pluralité d'antennes de réception dans l'ensemble d'antennes de réception forment un premier ensemble de centres de phase équivalents; et

le point médian d'une ligne de connexion entre une antenne d'émission du deuxième ensemble d'antennes d'émission et une antenne de réception parmi une pluralité d'antennes de réception la plus proche de ladite antenne d'émission dans l'ensemble d'antennes de réception est déterminé comme étant le centre de phase équivalent virtuel d'une paire constituée de ladite antenne d'émission et de ladite antenne de réception, la distance entre des centres de phase équivalents adjacents dans la première direction étant égale à la longueur d'onde des ondes millimétriques; et

la pluralité d'antennes d'émission dans le deuxième ensemble d'antennes d'émission et la pluralité d'antennes de réception dans l'ensemble d'antennes de réception forment un deuxième ensemble de centres de phase équivalents.

4.  Appareil d'inspection de sécurité de corps humain selon la revendication 3, dans lequel la distance entre un quelconque centre de phase équivalent dans le premier ensemble de centres de phase équivalents et un centre de phase équivalent le plus proche dudit centre de phase équivalent dans le deuxième ensemble de centres de phase équivalents dans la première direction est comprise entre 0,3 et 0,7 fois la longueur d'onde des ondes millimétriques.

5.  Appareil d'inspection de sécurité de corps humain selon la revendication 3, dans lequel la distance entre un quelconque centre de phase équivalent dans le premier ensemble de centres de phase équivalents et un centre de phase équivalent le plus proche dudit centre de phase équivalent dans le deuxième ensemble de centres de phase équivalents dans la première direction est 0,5 fois la longueur d'onde des ondes millimétriques; ou

dans lequel la distance entre le premier ensemble d'antennes d'émission et le deuxième ensemble d'antennes d'émission est inférieure à 10 % d'une distance d'imagerie.

6.  Appareil d'inspection de sécurité de corps humain selon la revendication 1, dans lequel les antennes d'émission du premier ensemble d'antennes d'émission sont conçues pour émettre des ondes millimétriques de manière séquentielle, et les antennes d'émission du deuxième ensemble d'antennes d'émission sont conçues pour émettre des ondes millimétriques de manière séquentielle et asynchrone par rapport aux antennes d'émission du premier ensemble d'antennes d'émissions.

7.  Appareil d'inspection de sécurité de corps humain selon la revendication 6, dans lequel l'ensemble des rangées entrées multiples et sorties multiples espacées est conçu pour permettre un balayage le long de la deuxième direction en se déplaçant dans la deuxième direction par rapport au corps humain à inspecter.

8.  Appareil d'inspection de sécurité de corps humain selon la revendication 7, dans lequel l'ensemble des rangées entrées multiples et sorties multiples espacées est en outre conçu pour mettre en œuvre une reconstruction d'image pour une zone imagée correcte en une seule fois sur la base d'un algorithme holographique à synthèse d'ouverture basé sur la transformée de Fourier à l'aide d'une équation d'imagerie:

$$\sigma(x,y) = FT_{2D}^{-1}\left[ FT_{2D}\left[ s(x_t, y_t, x_r, y_r, K_\omega) \right] e^{-j\sqrt{4k^2 - k_x^2 - k_y^2}\, R_0} \right]$$

dans laquelle $\sigma(x, y)$ est un coefficient de diffusion du corps humain, $R_0$ est une distance d'imagerie, $FT_{2D}$ est une transformée de Fourier bidimensionnelle, $FT_{2D}^{-1}$ est une transformée de Fourier inverse bidimensionnelle, j est une unité imaginaire, k est une constante de propagation, $k_x$ et $k_y$ sont respectivement des constantes de propagation spatiale,

$$S(x_t, y_t; x_r, y_r; K_\omega) = \iint_D \sigma(x_n, y_n) \exp[-jK_\omega(R_{t\_n} + R_{r\_n})]dr$$

est un signal d'écho provenant du corps humain reçu par une paire d'antennes d'émission et de réception; $K_\omega$ est une fréquence spatiale d'un signal échelonné de fréquence; pour une cible ponctuelle dans une zone cible, I représente une cible ponctuelle diffusée en $I(x_n, y_n)$, une distance entre I et une antenne d'émission $A_t$ est définie comme $R_{t,n}$, et une distance entre I et une antenne réceptrice $A_r$ est définie comme $R_{r,n}$.

9. Appareil d'inspection de sécurité de corps humain selon la revendication 1,
dans lequel le premier ensemble de rangées entrées multiples et sorties multiples espacées (100) est conçu pour émettre des ondes millimétriques de la fréquence la plus basse à la fréquence la plus élevée, et le deuxième ensemble de rangées entrées multiples et sorties multiples espacées (200) est conçu pour émettre des ondes millimétriques de la fréquence la plus élevée à la fréquence la plus basse, ou le deuxième ensemble de rangées entrées multiples et sorties multiples espacé (200) est conçu pour émettre des ondes millimétriques de la fréquence la plus basse à la fréquence la plus élevée et le premier ensemble de rangées entrées multiples et sorties multiples espacées (100) est conçu pour émettre des ondes millimétriques de la fréquence la plus élevée à la fréquence la plus basse.

**FIG. 1**

**FIG. 2**

**FIG. 3**

FIG. 4

FIG. 5

FIG. 6

FIG. 7

**FIG. 8**

**FIG. 9**

100

Entrance

S

Exit

200

**FIG. 10**

EP 3 845 931 B1

**FIG. 11**

**FIG. 12**

28

**FIG. 13**

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007075889 A1
- CN 109856632 A
- CN 209433032 U
- CN 106054181 B
- CN 106707275 B
- CN 109799546 A

### Non-patent literature cited in the description

- **L. YUJIRI.** Passive millimeter wave imaging. *IEEE MII-S Int. Microw. Sym. Dig*, 2006, 98-101
- Advanced personnel screening. *Security & Detection Systems*, 2016, http://www.sds.I-3com.com/products/ advanced imagingtech.htm
- *IEEE TRANSACTIONS ON GEOSCIENCE AND REMOTE SENSING*, October 2011, vol. 49 (10)